# EUROPEAN PATENT APPLICATION

(11) **EP 3 016 013 A1**
(43) Date of publication of application: **04.05.2016**
(21) Application number: 13887818.6
(22) Date of filing: 25.06.2013
(51) Int. Cl.: G06F 21/31

(54) **INFORMATION PROCESSING DEVICE, TERMINAL DEVICE, INFORMATION PROCESSING PROGRAM, AND INFORMATION PROCESSING METHOD**

(71) Applicant: Fujitsu Limited, Kawasaki-shi, Kanagawa 211-8588 (JP)
(72) Inventor: OHBITSU, Toshiro, Kawasaki-shi Kanagawa 211-8588 (JP)
(74) Representative: Schultes, Stephan
(86) International application number: PCT/JP2013/067361
(87) International publication number: WO 2014/207821

(57) **Abstract**

An information processing device is provided with a control unit and an information storage unit that associates feature information that represents a feature of authentication image data with user identification information and stores the result. The control unit determines whether a requester is a user who is identified by acquired user identification information by: acquiring image data, user identification information, and position presentation information that indicates the position of authentication image data that is embedded in the image data from a requester who requests processing of the image data via a network; extracting the image data of the position that is indicated by the acquired position presentation information from the acquired image data; and comparing feature information that represents a feature of the extracted image data with the feature information that is associated with the acquired user identification information and stored in the information storage unit. When the requester is determined to be the user who is identified by the acquired user identification information, the processing of the image data that is requested by the requester is carried out.

## Description

### FIELD

The embodiments discussed herein are related to an information processing apparatus, a terminal apparatus, an information processing program and information processing method.

### BACKGROUND

As widely known, over the recent years, a photo captured by a digital camera and other equivalent devices has been actively opened to the public on a self Web page (Website), and, however, contents of such a Web page are altered or falsified if a user ID and a password are known.

A variety of technologies (refer to, e.g., Patent document 1) for personal authentication have been developed. It is therefore possible to perform such a type of personal authentication as to make spoofing difficult when updating the Web page described above. However, when adopting the existing personal authentication making the spoofing difficult, the Web page is not updated by an operation as simple as inputting the user ID and the password.

### [Document of Prior Art]

### [Patent document]

[Patent document 1] Japanese Laid-open Patent Publication No.2007-26330

### SUMMARY

The technology of the disclosure aims at providing a technology enabling such confirmation without increasing a load on a user that a requester making a request for a process about image data via a network is identical with a self user.

An information processing apparatus according to one aspect of a technology of the disclosure includes an information storage unit to store characteristic information representing a characteristic of authentication image data by being associated with user identifying information; and a control unit, the control unit executing a process of acquiring image data, the user identifying information and position indicating information indicating a position of the authentication image data embedded in the image data from a requester making a request for a process with respect to the image data via a network, a process of extracting image data in position indicated by the acquired position indicating information from the acquired image data, and determining whether the requester is identical with a self user identified by the acquired user identifying information by comparing characteristic information representing the characteristic of the extracted image data with the characteristic information stored in the information storage unit by being associated with the acquired user identifying information, a process of executing the process requested by the requester with respect to the acquired image data when the requester is determined to be the self user identified by the acquired user identifying information.

According to the technology of the disclosure, it is feasible to provide the technology enabling such confirmation without increasing the load on the user that the requester making the request for the process about the image data via the network is identical with the self user.

### BRIEF DESCRIPTION OF THE DRAWINGS

FIG. 1 is an explanatory diagram of a configuration and a usage mode of an information processing apparatus according to a first embodiment;
FIG. 2 is an explanatory diagram of an example of a functional block configuration of the information processing apparatus according to a first embodiment and an example of a functional block configuration of a user equipment (UE);
FIG. 3 is a diagram of a hardware configuration of a computer usable as components of the information processing apparatus;
FIG. 4 is a diagram of a hardware configuration of a mobile phone usable as the user equipment;
FIG. 5 is a flowchart of one example of an individual introduction page open request process;
FIG. 6 is an explanatory diagram of a profile photo capturing screen displayed when in the individual introduction page open request process;
FIG. 7 is an explanatory diagram of a position and a size of an authentication image region, of which the position is specified by a region position specifying process, with respect to a profile photo;
FIG. 8 is a flowchart of one example of an open request response process;
FIG. 9 is a flowchart of one example of a characteristic information registration request response process;
FIG. 10 is a flowchart of one example of an image/video registration request process;
FIG. 11 is a flowchart of one example of a registration request response process;
FIG. 12 is a flowchart of one example of an authentication request response process;
FIG. 13 is a sequence diagram of processes among a user equipment A, an authentication management server, an image determination server and a Web service server when opening the individual introduction page;
FIG. 14 is a sequence diagram of processes among the user equipment A, the authentication management server, the image determination server and the Web service server when registering the image data in the individual introduction page;
FIG. 15 is a sequence diagram of processes among a user equipment B, the authentication management server, the image determination server and the Web service server when unlawfully registering the image data in the individual introduction page;
FIG. 16 is an explanatory diagram of an example of a functional block configuration of the information processing apparatus according to a second embodiment and an example of a functional block configuration of the user equipment;
FIG. 17 is a flowchart of a registration request response process executed by the authentication management server of the information processing apparatus according to the second embodiment;
FIG. 18 is an explanatory diagram of an example of an algorithm for restoring the authentication image region;
FIG. 19 is an explanatory diagram of an example of a functional block configuration of the information processing apparatus according to a third embodiment and an example of a functional block configuration of the user equipment;
FIG. 20 is a flowchart of one example of the open request response process executed by the user equipment in combination with the information processing apparatus according to the third embodiment;
FIG. 21 is a sequence diagram of processes among the user equipment, the authentication management server, the image determination server and the Web service server when opening the individual introduction page; and
FIG. 22 is a sequence diagram of processes among the user equipment, the authentication management server, the image determination server and the Web service server when registering the video data in the individual introduction page.

### DESCRIPTION OF EMBODIMENTS

Embodiments of the present invention will hereinafter be described based on the drawings. Configuration of the following embodiments are exemplifications, and the present invention is not limited to the configurations of the embodiments.

### <<First Embodiment>>

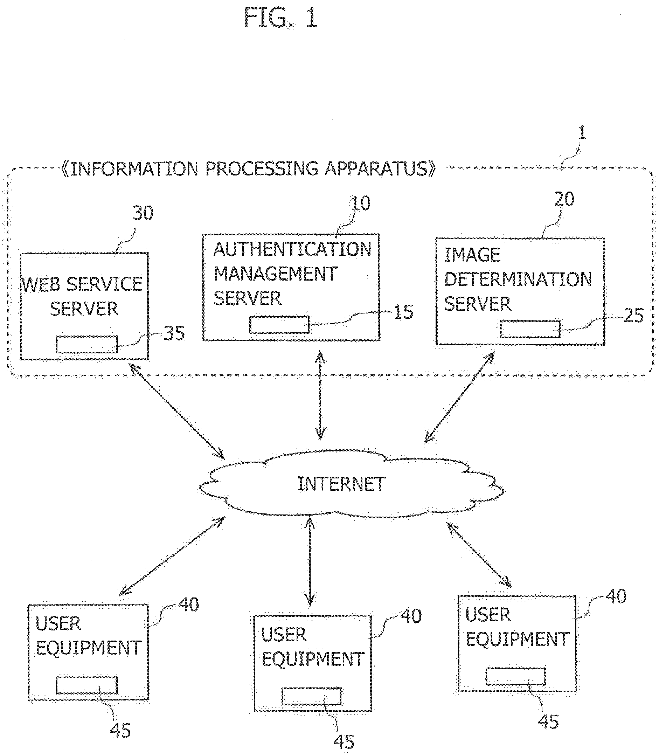

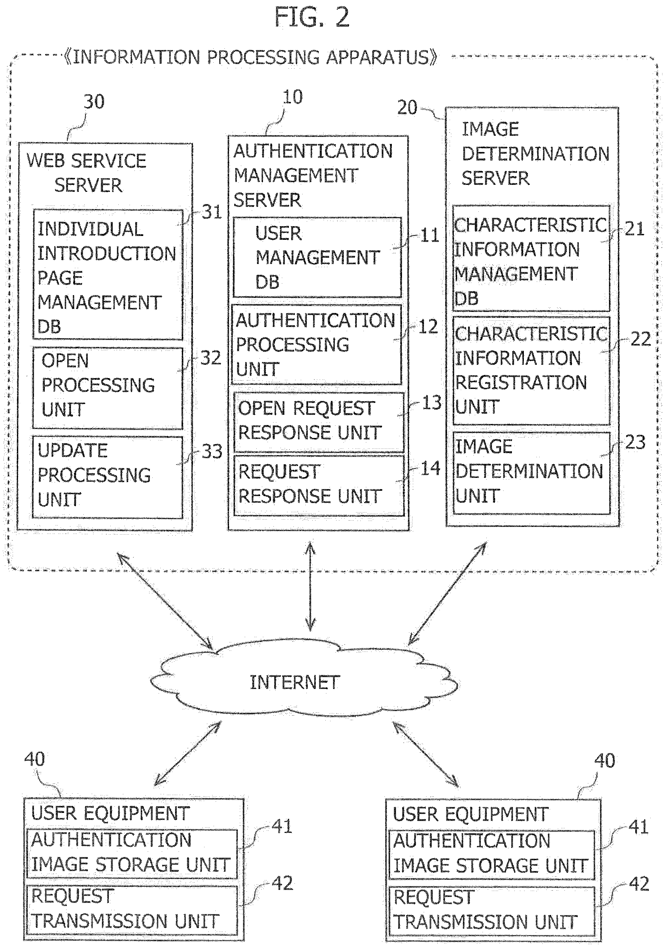

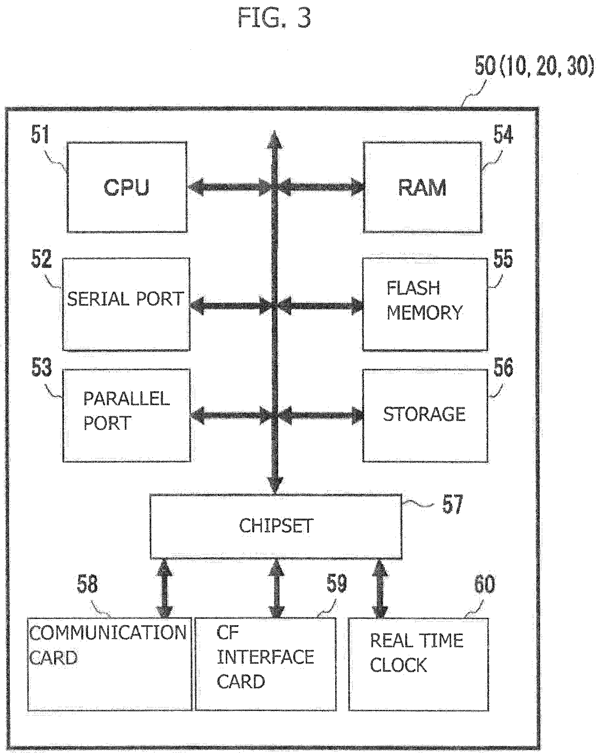

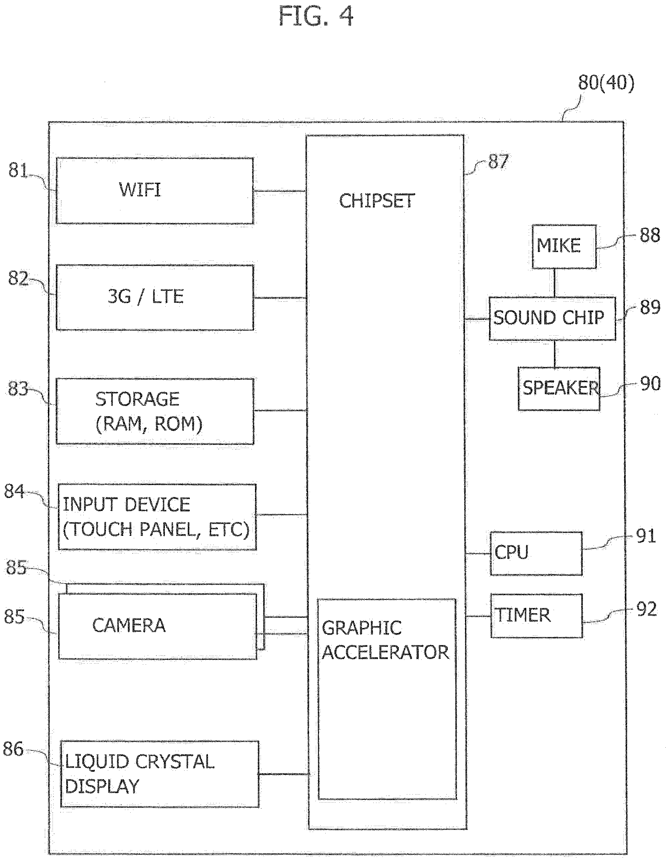

The discussion will begin with an outline of an information processing apparatus according to the first embodiment by using FIGS. 1 - 4. Note that FIG. 1 among these drawings is an explanatory diagram of a configuration and a usage mode of an information processing apparatus 1 according to the first embodiment. FIG. 2 is an explanatory diagram of an example of a functional block configuration of a user equipment (UE) 40 and an example of a functional block configuration of the information processing apparatus 1. FIG. 3 is a diagram of a hardware configuration of a computer usable as an authentication management server 10 and other equivalent servers, and FIG. 4 is a diagram of a hardware configuration of a mobile phone usable as the user equipment 40.

The information processing apparatus 1 according to the first embodiment is an apparatus for providing Web services enabling users to open individual introduction pages easily (without the users managing the server). Herein, the "user" connotes a person who will already have acquired a user IDentification (ID) from the information processing apparatus 1 by performing a user registration procedure. The "individual introduction page of a certain user" connotes a Web page on which a profile photo of the user is posted, and also a Web page enabling the user to the user register (add) image data and video data and to change the profile photo.

As illustrated in FIG. 1, the information processing apparatus 1 includes an authentication management server 10, an image determination server 20 and a Web service server 30 each connected to the Internet.

The authentication management server 10 is an apparatus configured by installing an authentication management server program 15 together with Operating System (OS) and other equivalent programs into a computer that is communication-enabled via the Internet. The image determination server 20 is an apparatus configured by installing an image determination server program 25 together with OS and other equivalent programs into a computer that is communication-enabled via the Internet. Similarly, the Web service server 30 is an apparatus configured by installing a Web service server program 35 together with OS and other equivalent programs into a computer that is communication-enabled via the Internet. Note that the authentication management server program 15 and other equivalent programs are installed into the computers by reading from non-transitory portable recording mediums instanced by a Compact Disc Read-Only Memory (CD-ROM) and other equivalent mediums and transferring from storage devices of other computers.

As depicted in FIG. 2, the authentication management server 10, upon a CPU's running the authentication management server program 15, functions as an apparatus including, e.g., a user management DB 11, an authentication processing unit 12, an open request response unit 13 and a request response unit 14. The image determination server 20, upon the CPU's running the image determination server program 25, functions as an apparatus including, e.g., a characteristic information management DB 21, a characteristic information registration unit 22 and an image determination unit 23. The Web service server 30, upon the CPU's running the Web service server program 35, functions as an apparatus including, e.g., an individual introduction page management DB 31, an open processing unit 32 and an update processing unit 33.

Note that the computer for the server involves using a computer 50 having the hardware configuration, e.g., as illustrated in FIG. 3.

A serial port 52, a parallel port 53 and a Compact Flash (CF) interface card 59 equipped in the computer 50 are interfaces used for modifying the programs and conducting a variety of settings. A flash memory 55 is a memory used for storing OS, the respective server programs (the authentication management server program 15 and other equivalent programs) and setting files, and also used as an extended memory area.

A storage 56 is a HDD used for saving various items of data. A communication card 58 is an interface card for performing communications via the Internet, and a real time clock 60 is an integrated circuit that continues counting the present time even when cutting off a power source of the computer 50. A RAM 54 is a memory used as an operating area for a variety of processes, and a chipset 57 is a circuit to manage reception and transfer of the data between the respective units within the computer 50. The CPU 51 is a unit functioning as the variety of functional blocks described above by running the variety of programs (the authentication management server program 15 and other equivalent programs) on the flash memory 55.

The user equipment 40 (FIG. 1) is a terminal apparatus used for the user to request the information processing apparatus 1 to open and update the individual introduction page. An image data registration program 45 is installed into the user equipment 40 of each user.

The image data registration program 45 is, though will be described in detail later on, some type of Web client. The image data registration program 45 is classified into a program for the terminal apparatus with International Mobile Equipment Identity (IMEI) being set therein and a program for the terminal apparatus with the IMEI not being set therein. In other words, the image data registration program 45 is classified into the program for a mobile phone and a data communication terminal (which will hereinafter be generically termed the mobile phone) with the IMEI being set therein, and the program for the terminal apparatus (which will hereinafter be termed a Personal Computer (PC)) not having a telephone function.

Every type of image data registration program 45 is provided to applicants or wishers by being downloaded from the Web server (e.g., the Web service server 30) and via the non-transitory portable recording mediums instanced by the CD-ROM (Compact Disc Read-Only Memory) and other equivalent mediums.

Note that the mobile phone used as the user equipment 40 by installing the image data registration program 45, is a mobile phone including normally a built-in digital camera.

FIG. 4 illustrates an example of a hardware configuration of such a mobile phone. A Wireless Fidelity (WiFi) circuit 81 equipped in a mobile phone 80 is a communication circuit for a wireless LAN. This WiFi circuit 81 is used normally for accessing the information processing apparatus 1.

A 3rd. Generation/Long Term Evolution (3G/LTE) circuit 82 is a communication circuit for packet communications (for telephones). A microphone ("mike") 88 is a device to convert voices/sounds into analog electric signals, and a loud speaker ("speaker") 90 is a device to convert the analog electric signals into the voices/sounds. A sound chip 89 is a circuit that executes a process of converting analog signals output from the microphone 88 into digital signals, and a process of converting the digital signals inputted from a chipset 87 into the analog signals and supplying the analog signals to the loud speaker 90.

A timer 92 is a so-called watch dog timer (WDT). A liquid crystal display 86 is a display device for displaying various categories of information. An input device 84 is a device for inputting the information to the mobile phone 80. The input device 84 includes a push button switch provided on an enclosure of the mobile phone 80, and a transparent touch panel disposed on the liquid crystal display 86.

A storage 83 is a unit for storing various categories of information. This storage 83 includes a flash memory (Read Only Memory (ROM) in FIG. 2) containing records of the various categories of programs and various items of data, and the Random Access Memory (RAM) used as a temporary storage area for programs and data.

Each of two cameras 85 within the mobile phone 80 is a digital camera that generates the image data representing optical images (results of capturing the images). One camera 85 (called an in-camera or a front camera) is attached to the enclosure of the mobile phone 80 to enable an operator seeing the liquid crystal display 86 to capture images. Another camera 85 (called a out-camera or a main camera) is attached to the enclosure of the mobile phone 80 to enable the operator to capture the images in a reversed direction. Note that outputs of the respective cameras 85 are used also for generating the video data.

The chipset 87 is a circuit to manage the reception and the transfer of the data between the respective devices within the mobile phone 80. A graphic accelerator within the chipset 87 is a circuit to executes, in place of the CPU 91, a process for displaying a desired image on the liquid crystal display 86. The CPU 91 is a unit to execute the various categories of programs by reading the programs from the flash memory onto the RAM.

When the user equipment 40 is assumed to be this mobile phone 80, the image data registration program 45 (for the mobile phone) is stored in the flash memory (ROM) of the storage 83. The CPU 91 within the user equipment 40 (the mobile phone 80), when a predetermined operation is performed on the input device 84, reads the image data registration program 45 onto the RAM of the storage 83 and executes the program 45.

When the user equipment 40 is assumed to be the PC, the image data registration program 45 (for the PC) is stored in the Hard Disk Drive (HDD) or an Solid State Drive (SDD) in the PC. The CPU within the user equipment 40 (PC), when instructed to execute the image data registration program 45 by operating a keyboard or a mouse, reads the image data registration program 45 onto the RAM and executes the program 45.

The user equipment 40 with the CPU having executed the image data registration program 45 functions as an apparatus including, as depicted in FIG. 2, e.g., an authentication image storage unit 41 and the request transmission unit 42.

Functions of the information processing apparatus 1 will hereinafter be specifically described together with functions of the user equipment 40. Note that the image/video data connotes the image data or the video data in the following discussion. The profile photo data connotes the image data of the photo posted as the profile photo on the individual introduction page.

The authentication image storage unit 41 equipped in the user equipment 40 (FIG. 2) is a storage unit (storage area) for saving authentication image data defined as the image data of an authentication image. The authentication image is, though an in-depth description thereof will be made later on, a image of a fixed size used for personal authentication. A CPU (e.g., a CPU 91) of the user equipment 40 prepares the authentication image storage unit 41 storing none of images in the user equipment 40 when executing the image data registration program 45 for the first time. Then, the CPU stores the authentication image data in this authentication image storage unit 41 when opening the individual introduction page for the user of the self user equipment 40. Note that the user equipment 40 serving as the mobile phone 80 (FIG. 4) uses a part of the storage area of the flash memory (ROM) of the storage 83 as the authentication image storage unit 41. The user equipment 40 serving as the PC uses a part of the storage area of the HDD or the SSD as the authentication image storage unit 41.

The request transmission unit 42 is a unit (an in-depth description thereof will be made alter on) that acquires various items of information in an interactive mode from the operator of the user equipment 40, generates, based on the acquired information, a variety of requests, and transmits the generated requests to the authentication management server 10.

The individual introduction page management DB 31 in the Web service server 30 is a database for storing information (URL (Uniform Resource Locator), open date/time and other equivalent items of information) about each already-opened individual introduction page by being associated with a user ID of a page owner (page establisher) of each individual introduction page.

The open processing unit 32 is a unit (functional block) that establishes the individual introduction page of each user, and opens the page to the public on the Internet. The open processing unit 32, when receiving an open request containing the user ID, the image data of the profile photo and text information from the authentication management server 10, opens the individual introduction page of the user identified by the user ID. The open processing unit 32 also executes a process of storing the URL and other equivalent data of the opened individual introduction page in the individual introduction page management DB 31 by being associated with the user ID. The open processing unit 32 having finished a series of processes transmits completion notification to the authentication management server 10.

The update processing unit 33 in the Web service server 30 is a unit taking charge of a process of updating contents of the individual introduction page of each user. The update processing unit 33 receives a registration request containing at least the user ID and the image/video data from the authentication management server 10. The update processing unit 33 having received the registration request refers to the individual introduction page management DB 31, thereby specifying the individual introduction page of the user identified by the user ID contained in the registration request. The update processing unit 33 registers (adds) the received image/video data as an element of the registration request to the specified individual introduction page. The update processing unit 33 executes a process of adding, when the received registration request contains the text information, this text information to the individual introduction page. The update processing unit 33 having finished registering the image/video data transmits the completion notification to the authentication management server 10.

The update processing unit 33 receives also a profile photo change request (which will hereinafter be simply referred to also as the change request) containing at least the user ID and the profile photo data (the image data of the profile photo) from the authentication management server 10. The update processing unit 33 having received the change request refers to the individual introduction page management DB 31, thereby specifying the individual introduction page of the user identified by the user ID contained in the change request. The update processing unit 33 changes the profile photo data of the specified individual introduction page to the profile photo data received as the element of the registration request. The update processing unit 33 executes also a process of changing, when the received change request contains the text information, the text information posted together with the profile photo to the text information contained in the change request. The update processing unit 33 having finished changing the profile photo data transmits the completion notification to the authentication management server 10.

The user management DB 11 in the authentication management server 10 is a database for storing the user IDs and passwords of the users together with individual information (names, addresses and other equivalent data) of the users and information about services provided to the users.

The authentication processing unit 12 is a unit that conducts the personal authentication by using the user ID and the password. When each individual user logs in the information processing apparatus 1, the user equipment 40 of each user transmits a log-in request containing log-in information (the user ID and the password) to the authentication processing unit 12. When receiving the log-in request from a certain user equipment 40, the authentication processing unit 12 determines whether the same log-in information as the log-in information contained in the log-in request is registered in the user management DB 11. The authentication processing unit 12, when the same log-in information as the received log-in information is registered in the user management DB 11, transmits information purporting completion of the log-in (which will hereinafter be termed log-in completion notification) back to the user equipment 40. Whereas when the same log-in information as the received log-in information is not registered in the user management DB 11, the authentication processing unit 12 sends information purporting a failure in the log-in back to the user equipment 40.

Note that when the log-in is approved by the authentication processing unit 12, so-called session management is initiated. To be specific, a session tracking parameter is contained in each piece of information transmitted from the user equipment 40, such a status is reached that a sender of the information on the side of the authentication management server 10 is specified based on the session tracking parameter.

The authentication processing unit 12 also has a user registration accepting function. To simply describe this function, the authentication processing unit 12, when registering the user, determines the user ID allocated to a requester (the operator of the user equipment 40) for the user registration, and notifies the requester of the user ID. The authentication processing unit 12 prompts the requester to input the individual information (name, and other equivalent data) and the password on a variety of Web pages. The authentication processing unit 12, when the items of information used for the user registration can be acquired, registers these items of information as the information about a new user together with the user ID notified to the requester in the user management DB 11. The authentication processing unit 12 transmits information purporting completion of the user registration to the user equipment 40.

The characteristic information management DB 21 in the image determination server 20 is a database for storing characteristic information (an in-depth description thereof will be made later on) about the authentication image of each user by being associated with the user ID of each user.

The open request response unit 13 of the authentication management server 10 is a unit (functional block) that processes the open request given from the user equipment 40 in collaboration with the characteristic information registration unit 22 of the image determination server 20 and with the open processing unit 32 of the Web service server 30. The request response unit 14 of the authentication management server 10 is a unit that processes the registration request and the profile photo change request given from the user equipment 40 in collaboration with the image determination unit 23 of the image determination server 20 and the update processing unit 33 of the Web service server 30. Note that the open request, the registration request and the profile photo change request given from the user equipment 40 are requests, which are converted by the authentication management server 10 (the open request response unit 13 and the request response unit 14) into requests categorized by the same nomenclature with respect to the Web service server 30.

The description will start with a procedure of processing the open request by the open request response unit 13, the characteristic information registration unit 22 and the open processing unit 32 together with a procedure of transmitting the open request by the user equipment 40 (the request transmission unit 42).

The request transmission unit 42, upon starting the operation, displays at first a log-in page for logging in the image processing apparatus 1 on the display (the liquid crystal display 86 and other equivalent displays). More specifically, the request transmission unit 42 acquires source data of the log-in page from the image processing apparatus 1 by transmitting a predetermined request onto the Internet. The request transmission unit 42 displays the log-in page on the display by rendering based on the acquired source data.

The operator of the user equipment 40, when the user registration is completed, logs in the image processing apparatus 1 by inputting the user ID and the password of the user himself or herself to the log-in page. The operator, when the user registration is not yet completed, logs in the image processing apparatus 1 after conducting the user registration through a series of operations starting with operating a link to a user registration page provided on the log-in page.

The request transmission unit 42, when the operator completes the log-in (i.e., when receiving the cog-in completion notification described above), determines whether the authentication image data is stored in the authentication image storage unit 41. As already described, the authentication image data is not stored in the authentication image storage unit 41 of the user equipment 40 of the user not yet opening the individual introduction page. Therefore, the request transmission unit 42, when the authentication image data is not stored in the authentication image storage unit 41, starts an individual introduction page open request process for requesting the image processing apparatus 1 to open the individual introduction page for the operator of the self user equipment.

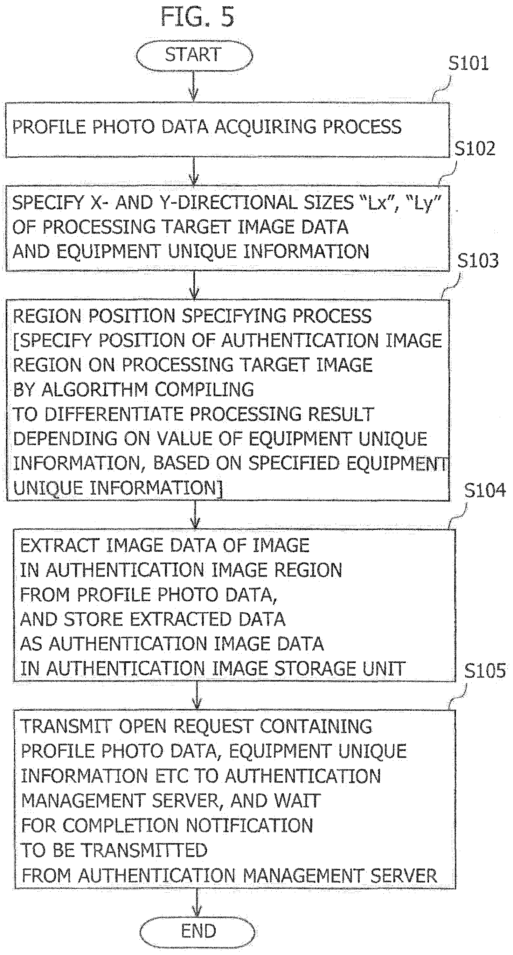

The individual introduction page open request process executed by the request transmission unit 42 is a process of the procedure depicted in, e.g., FIG. 5.

To be specific, the request transmission unit 42 having started the individual introduction page open request process executes, to begin with, a profile photo data acquiring process (step S101). The profile photo data acquiring process executed by the request transmission unit 42 according to the first embodiment is a process of prompting the operator of the self user equipment 40 to capture or select the image data of the photo to be posted as the profile photo on the individual introduction page. The profile photo data acquiring process is also a process of prompting the operator to input the text information to be posted together with the profile photo.

Contents of the profile photo data acquiring process executed by the request transmission unit 42 according to the first embodiment will hereinafter be described by exemplifying a case of the user equipment 40 being used as the mobile phone 80.

The request transmission unit 42 having started the profile photo data acquiring process prompts the operator to select an already captured photo or a newly captured photo as the profile photo by displaying a predetermined screen (which will hereinafter be referred to as a first selection screen) on the liquid crystal display 86.

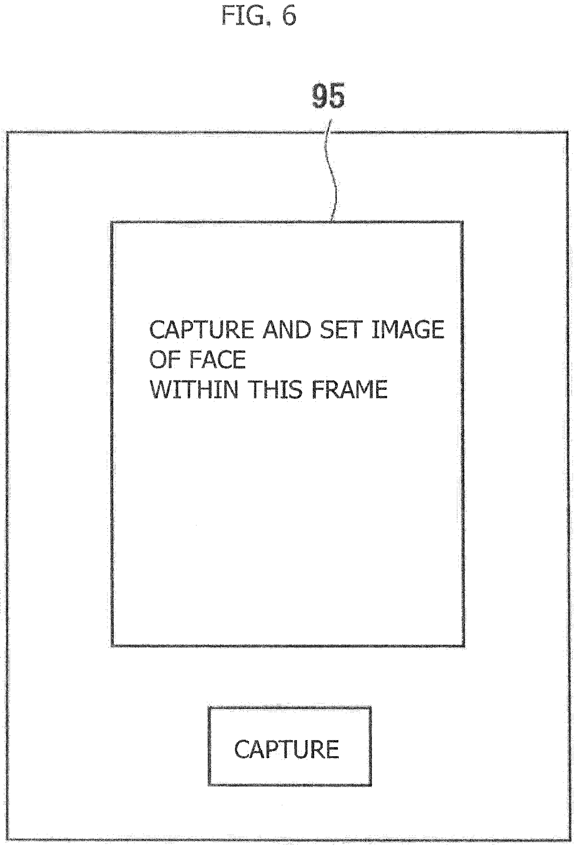

The operator selects newly capturing the profile photo, in which case the request transmission unit 42 displays a profile photo capturing screen as depicted in FIG. 6 on the liquid crystal display 86.

This profile photo capturing screen is a screen on which a message displayed in a frame 95 will disappear upon an elapse of a fixed period of time. The profile photo capturing screen is a screen on which a capturing result of the camera 85 for capturing the image of the operator at that point of time is displayed in the frame 95, and is also a screen on which to display the frame 95 sized down at approximately several percent from an actually captured photo.

The request transmission unit 42, when pressing down a "capture" button on the profile photo capturing screen, stores the capturing result of the camera 85 for capturing the image of the operator at that point of time as the profile photo data in the storage 83. The request transmission unit 42 finishes the profile photo data acquiring process after executing the process of acquiring the text information to be posted together with the profile photo from the operator.

Whereas when the operator selects the already captured photo as the profile photo, the request transmission unit 42 displays the profile photo selection screen for prompting the operator to select the profile photo data from within the existing image data on the liquid crystal display 86. The request transmission unit 42, when the operator selects image data, stores information indicating that this image data is the profile photo data. The request transmission unit 42 finishes the profile photo data acquiring process after executing the process of acquiring the text information to be posted together with the profile photo from the operator.

Incidentally, such an event that the request transmission unit 42 of the mobile phone (the user equipment 40 serving as the mobile phone) displays the first selection screen described above, is limited to a case of the in-camera (corresponding to the camera 85 for capturing the image of the operator in the mobile phone 80) being equipped in the mobile phone. The request transmission unit 42 of the mobile phone not equipped with the in-camera displays the profile photo selection screen without displaying the first selection screen.

The profile photo data acquiring process executed by the request transmission unit 42 of the user equipment 40 defined as the PC is also the same as the process described above. Specifically, the profile photo data acquiring process executed by the request transmission unit 42 of the PC is also a process enabling the PC operator to capture the profile photo data by use of a Web camera and other equivalent cameras connected to the PC or to select the profile photo data from within the existing image data.

The request transmission unit 42 having finished the profile photo data acquiring process (step S101 in FIG. 5) specifies an X-directional size (pixel count) Lx and a Y-directional size Ly of the profile photo data (processing target image data in FIG. 5) captured/selected by the operator (step S102). The request transmission unit 42 specifies also equipment unique information of the self user equipment 40 (step S102).

The information specified as the equipment unique information by the request transmission unit 42 of the user equipment 40 as the mobile phone when processing in step S102, is the IMEI being set within the self mobile phone. The information specified as the equipment unique information by the request transmission unit 42 of the user equipment 40 as the PC, is a Media Access Control (MAC) address being set in a Network Interface Card (NIC) of the PC.

The request transmission unit 42 having finished the process in step S102 executes a region position specifying process (step S103).

The region position specifying process is a process of specifying positions of an authentication image region on the profile photo (the processing target image in FIG. 5) by an algorithm with a processing result being different depending on a value of the equipment unique information on the basis of the specified equipment unique information. Herein, the "authentication image region" is a rectangular region in which an internal image thereof is treated as the "fixed size of authentication image" described above. In other words, the authentication image region is the rectangular region in which the image data representing the internal image is treated as the authentication image data described above. Note that the region position specifying process involves adopting a process of specifying normally a region in the vicinity of edges of the profile photo as the authentication image region.

One example of the region position specifying process (an operational example of the request transmission unit 42 when in the region position specifying process) will hereinafter be described. Note that symbols "Sx" and "Sy" represent preset values as the X-directional size and the Y-directional size of the authentication image (the authentication image region) in the following discussion. A symbol "Rh" represents a preset value as a height (Y-directional size) of the selection target region from within which the authentication image region is selected. Normally, values of "5" through "20" or thereabout are used as "Sx" and "Sy", and a value of "100" or thereabout (e.g., "80") is used as "Rh".

The request transmission unit 42 having started the region position specifying process extracts fields registering values indicating serial number/serial ID (which will hereinafter be referred to as serial number information) from the equipment unique information specified by the process in step S102. To be specific, the IMEI is 15-digit information containing information, i.e., a string of numerals ranging from a first digit to an eighth digit that indicate a manufacturer, a device type and a country of origin, a serial number, i.e., a string of numerals from a ninth digit to a fourteenth digit; and a check digit, i.e., a fifteenth digit numeral. The MAC address is information, of which high-order 32 bits represent a name of device type of the network device and low-order 16 bits represent a serial ID. Accordingly, the request transmission unit 42 of the user equipment 40 serving as the mobile phone extracts the string of numerals from the ninth digit to the fourteenth digit as the serial number information from the equipment unique information (IMEI). The request transmission unit 42 of the user equipment 40 as the PC extracts the low-order 16-bit information as the serial number information from the equipment unique information (MAC address).

Thereafter, the request transmission unit 42 divides the extracted serial number information by 2 as information of a first half and information of a second half. Subsequently, the request transmission unit 42 calculates a remainder obtained by dividing a numeric value indicated by the information of the first half by "Lx-Sx+1", and stores a calculated result as an X-coordinate value "x0" of an origin of the authentication image region. Herein, the origin of the authentication image region connotes a vertex depicted on a left upper side when displaying the image based on the processing target image data in four vertexes of the authentication image region.

The request transmission unit 42 calculates a remainder obtained by dividing a numeric value indicated by the information of the second half by "Rh-Sy+1", and stores a calculated result as a Y-coordinate value "y0" of the origin of the authentication image region. Then, the request transmission unit 42 finishes the region position specifying process.

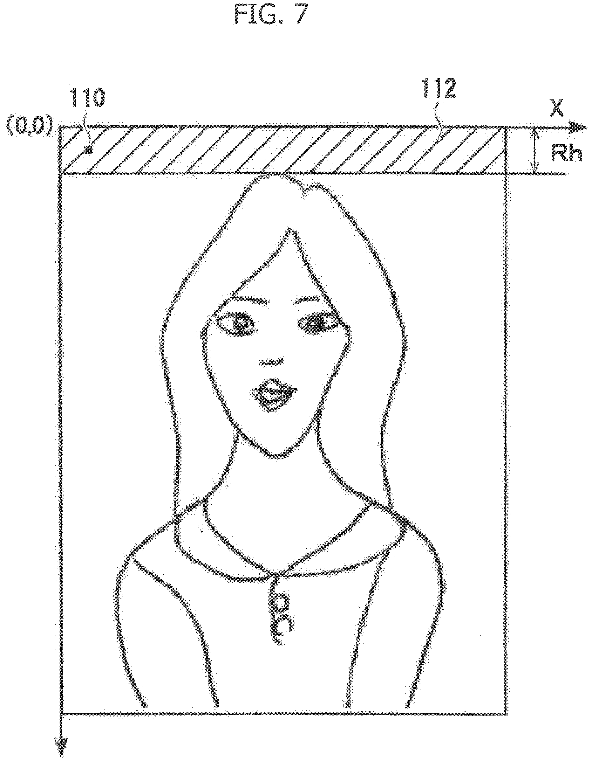

In short, a remainder given by diving a certain numeric value by "Lx-Sx+1" becomes a value equal to or larger than "0" but equal to or smaller than "Lx-Sx". A remainder given by diving a certain numeric value by "Rh-Sy+1" becomes a value equal to or larger than "0" but equal to or smaller than "Rh-Sy". The symbols "Sx" and "Sy" are the X-directional size and the Y-directional size of the authentication image region, respectively. It therefore follows that the region position specifying process of the procedure described above is a process of obtaining a position of the origin of an authentication image region 110 from the equipment unique information so that the entire authentication image region 110 is embraced by a selection target region 112 indicated by hatching in FIG. 7.

Note that the frame 95 on the profile photo capturing screen (FIG. 6) described above is sized down at approximately several percent from the actually captured photo, and this is because of allowing the selection target region 112 to enter a background region of the profile photo. Size ratios of the regions 110, 112 to the profile photo are given as illustrated in FIG. 7, and these ratios are applied on such a condition that "Lx" and "Ly" are respectively "768 and "1024, both of "Sx" and "Sy" are "10", and the height "Rh" of the selection target region 112 is "80". When the size (Lx, Ly) of the profile photo becomes much larger, the size ratios of the selection target region 112 and the authentication image region 110 to the profile photo become much smaller. Conversely, when the size of the profile photo becomes much smaller, the size ratios of the selection target region 112 and the authentication image region 110 to the profile photo become much larger.

A process having a different processing procedure from the procedure described above, e.g., a process of calculating only one coordinate value and a process of using a fixed value of "500" or thereabout in place of "Lx", can be also adopted as the region position specifying process. However, the following discussion will describe the functions of the information processing apparatus 1 and of the user equipment 40 on the assumption that "the region position specifying process of calculating the X-coordinate value and the Y-coordinate value of the origin of the authentication image region from the equipment identifying information, "Lx", "Sx", "Sy" and "Rh" is executed in step S103.

Referring back to FIG. 5, the description of the individual introduction page open request process continues. The request transmission unit 42 having finished the region position specifying process extracts the image data of the image within the authentication image region, of which the position is specified by the region position specifying process, from the profile photo data captured/selected by the operator (step S104). Specifically, the request transmission unit 42 extracts the image data of the rectangular image, of which coordinates of two diagonal vertexes are given by (x0, y0) and (x0+Sx-1, y0+Sy-1), from the profile photo data captured/selected by the operator.

Then, the request transmission unit 42 finishes the process in step S104 after storing the extracted image data as the authentication image data in the authentication image storage unit 41.

Note that the process in step S104 is a process of storing the authentication image data of a bitmap format in the authentication image storage unit 41 without changing the contents of the profile photo data captured/selected by the operator. Concretely, for instance, when the profile photo data is Joint Photographic Experts Group (JPEG) data, in step S104, at first, bitmap image data is generated from the JPEG data. The image data of the rectangular image is extracted from the generated bitmap image data, and is stored as the authentication image data in the authentication image storage unit 41. When the profile photo data is the bitmap image data, in step S104, the image data of the rectangular image is read from the bitmap image data, and is stored as the authentication image data in the authentication image storage unit 41.

The request transmission unit 42 having finished the process in step S104 transmits, to the authentication management server 10, the open request containing the profile photo data captured/selected by the operator, the text information inputted by the operator, and the specified unique information (step S105).

The open request transmitted to the authentication management server 10 is received by the open request response unit 13 (FIG. 2) of the authentication management server 10.

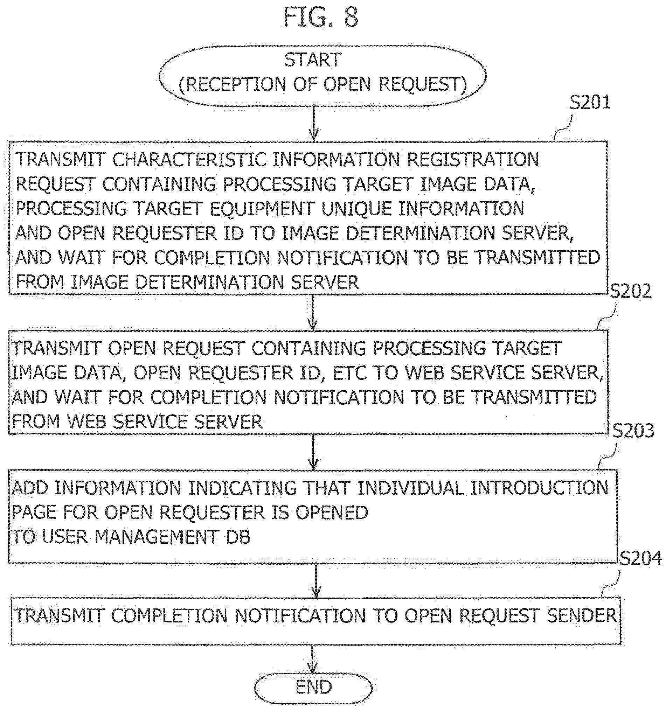

The open request response unit 13 having received the open request starts an open request response process of a procedure illustrated in, e.g., FIG. 8.

Note that the open request response unit 13, when receiving the open request, determines whether the received open request is suitably formatted or unsuitably formatted (e.g., a request containing the equipment unique information not apparently being the MAC address/IMEI) before actually starting the open request response process. The open request response unit 13, when the open request is unsuitably formatted, sends response-disabled notification, purporting that any response to the received request is not given, back to the user equipment 40 having transmitted the open request (which will hereinafter be termed a request sender) without starting the open request response process. The open request response unit 13, whereas when the received open request is suitably formatted, specifies the user ID of the open requester (which will hereinafter be referred to as a open requester ID) from the session tracking parameter contained in the open request. Subsequently, the open request response unit 13 searches the user management DB 11 for the information by use of the specified open requester ID, thereby determining whether the open requester is a person who has already opened the individual introduction page. The open request response unit 13 starts the open request response process when the open requester is a person not yet opening the individual introduction page, but sends the response-disabled notification back to the request sender without starting the open request response process whereas when the open requester is the person who has already opened the individual introduction page.

As illustrated in FIG. 8, the open request response unit 13 having started this open request response process, at first, transmits a characteristic information registration request containing the processing target image data, the processing target equipment unique information and the open requester ID to the image determination server 20 (step S201). Herein, the processing target image data and the processing target equipment unique information connote the image data (i.e., the profile photo data) and the equipment unique information respectively, which are contained in the received open request. The open requester ID connotes, as already defined, the user ID of the open requester specified from the session tracking parameter contained in the received open request.

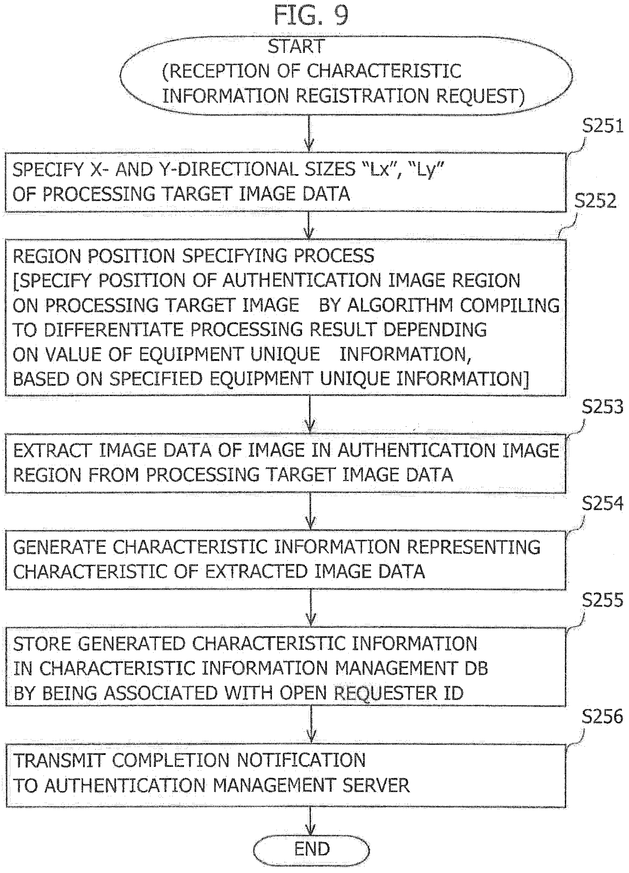

The characteristic information registration unit 22 (FIG. 2) receives a characteristic information registration request transmitted to the image determination server 20. The characteristic information registration unit 22 having received the characteristic information registration request starts, e.g., a characteristic information registration request response process of a procedure illustrated in FIG. 9.

To be specific, the characteristic information registration unit 22 having received the characteristic information registration request specifies, at first, the X-directional size "Lx" and the Y-directional size "Ly" of the image data (which will hereinafter be referred to as processing target image data) received as an element of the characteristic information registration request (step S251).

In subsequent step S252, the characteristic information registration unit 22 specifies a position of the authentication image region on the processing target image represented by the processing target image data by the region position specifying process having the same contents as those of the process executed within the user equipment 40.

Specifically, in step S252, the characteristic information registration unit 22 extracts the serial number information from the processing target equipment unique information. The characteristic information registration unit 22 calculates a remainder obtained by dividing a numeric value indicated by the information of the first half of the extracted serial number information by "Lx-Sx+1" as the X-coordinate value "x0 of the origin of the authentication image region. Further, the characteristic information registration unit 22 calculates a remainder obtained by dividing a numeric value indicated by the information of the second half of the extracted serial number information by "Rh-Sy+1" as the Y-coordinate value "y0" of the origin of the authentication image region.

The characteristic information registration unit 22 having finished the region position specifying process extracts, from the processing target image data, the image data of the image in the authentication image region, of which the position is specified by the region position specifying process (step S253). In other words, the characteristic information registration unit 22 extracts, from the profile photo data, the same image data as the data extracted when processing in step S104 of the individual introduction page open request process (FIG. 5).

The characteristic information registration unit 22 generates characteristic information representing characteristics of the extracted image data (step S254), and stores the generated characteristic information in the characteristic information management DB 21 by being associated with the open requester ID (step S255). Though applications of the characteristic information will be described later on, the characteristic information of a certain file of image data can involve using luminance histogram data on a per luminance/luminance class basis of the image data, and color histogram data on a per color/color class basis of the image data.

The characteristic information registration unit 22 having finished the process in step S255 transmits the completion notification to the authentication management server 10 (step S256). The characteristic information registration unit 22 finishes this characteristic information registration request response process.

The open request response unit 13 having transmitted the characteristic information registration requests to the image determination server 20 (the characteristic information registration unit 22, waits for the completion notification to be transmitted from the image determination server 20 (step S201 in FIG. 8).

The open request response unit 13, when receiving the completion notification, transmits the open request containing the processing target image data, the processing target text information and the open requester ID to the Web service server 30 (the open processing unit 32) (step S202). Herein, the "processing target text information" connotes, as already defined, the text information contained in the received open request. The "processing target image data" connotes the image data (i.e., the profile photo data) contained in the received open request.

As already described, the open processing unit 32 having received the open request transmits the completion notification to the authentication management server 10 (the open request response unit 13) after opening the individual introduction page for the open requester on the basis of the information contained in the open request. The open request response unit 13 having transmitted the open request to the Web service server 30 waits for the completion notification to be transmitted from the Web service server 30 (step S202).

When the completion notification is transmitted, the open request response unit 13 adds, to the user management DB 11, information purporting the completion of opening the individual introduction page for the open requester (step S203). The open request response unit 13 finishes this open request response process (FIG. 8) after transmitting the completion notification to the request sender (step S204).

The request transmission unit 42 having transmitted the open request to the authentication management server 10 waits for the completion notification to be received (step S105 in FIG. 5). The request transmission unit 42, when receiving the completion notification, finishes the process in step S105 and the individual introduction page open request process (the process in FIG. 5).

Next, a registration request processing procedure by the request response unit 14, the image determination unit 23 and the update processing unit 33, will be described together with a registration request transmission procedure by the user equipment 40 (the request transmission unit 42).

The request transmission unit 42, when finding that the authentication image data remains to be stored in the authentication image storage unit 41 after completing the log-in of the operator, prompts the operator to select which operation to be performed by displaying a predetermined operation selection screen on the display. The operations are:
· an addition of the image/video to the individual introduction page; and
· a change of the profile photo.

The request transmission unit 42 starts an image/video registration request process when the operator selects the "addition of the image/video to the individual introduction page", and starts a profile photo change request process when the operator selects the "change of the profile photo".

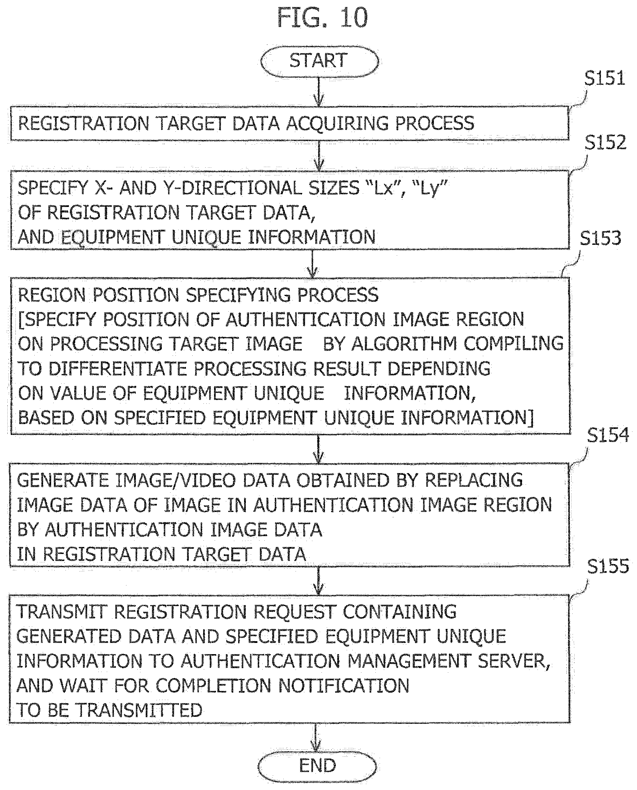

The image/video registration request process is a process of, e.g., a procedure illustrated in FIG. 10. To be specific, the operator selects the addition of the image/video to the individual introduction page, and hence the request transmission unit 42 having started the image/video registration request process executes, to begin with, a registration target data acquiring process (step S151).

The registration target data acquiring process is a process into which to modify the profile photo data acquiring process so as to enable the operator to select the data to be registered (added) to the individual introduction page from within following files of image/video data. These files of data are:
· existing image data or video data; and
· image data or video data to be newly captured.

When in this registration target data acquiring process, the image data or the video data captured or selected by the operator from within the existing data will hereinafter be termed registration target data.

The request transmission unit 42 having finished the registration target data acquiring process specifies the X-directional size "Lx" and the Y-directional size "Ly" of the registration image data, and the equipment unique information of the self user equipment 40 (step S152).

The process in step S152 is substantially the same as the process in step S102 except that the processing target is the video data. Specifically, the request transmission unit 42 of the user equipment 40 as the mobile phone specifies the IMEI set in the self mobile phone as the equipment unique information in step S152. The request transmission unit 42 of the user equipment 40 as the PC specifies the MAC address set in the NIC of the self PC as the equipment unique information.

The request transmission unit 42 having finished the process in step S152 executes the region position specifying process having the same contents as those of the process executed in step S103 (FIG. 5) by using the specified equipment unique information and X-directional size "Lx" (step S153).

Thereafter, the request transmission unit 42 generates data obtained by replacing, with the authentication image data, the image data of the image in the authentication image region, of which the position is specified by the region position specifying process, within the registration target data (step S154).

Concretely, in step S154, the request transmission unit 42, at first, determines whether the registration target data is the image data or the video data.

When the registration target data is the image data, the request transmission unit 42 prepares a copy of the registration target data on the RAM. Subsequently, the request transmission unit 42 replaces the image data of the image in the authentication image region with the authentication image data stored in the authentication image storage unit 41. To be specific, the request transmission unit 42 replaces the image data of the image, of which coordinates of two diagonal vertexes are given by (x0, y0) and (x0+Sx-1, y0+Sy-1), in the prepared copy with the authentication image data stored in the authentication image storage unit 41.

Whereas when the registration target data is the video data, the request transmission unit 42 prepares the copy of registration target data on the RAM. The request transmission unit 42 replaces the image data of the image in the authentication image region within the image data related to a head frame in the prepared copy with the authentication image data stored in the authentication image storage unit 41.

Note that the registration target data, whether the image data or the video data, is normally irreversibly compressed. Accordingly, step S154 normally entails executing "a process of extending the irreversibly compressed image data (in other words, the image data format is replaced by the bitmap format) and again irreversibly compressing the authentication image data after replacing a part of extended image data with the authentication image data".

The request transmission unit 42 having finished the process in step S154 transmits, to the authentication management server 10, the registration request containing the generated image/video data, the text information acquired from the operator and the equipment unique information specified when processing in step S152 (step S155).

The open request response unit 13 (FIG. 2) of the authentication management server 10 receives the registration request transmitted to the authentication management server 10.

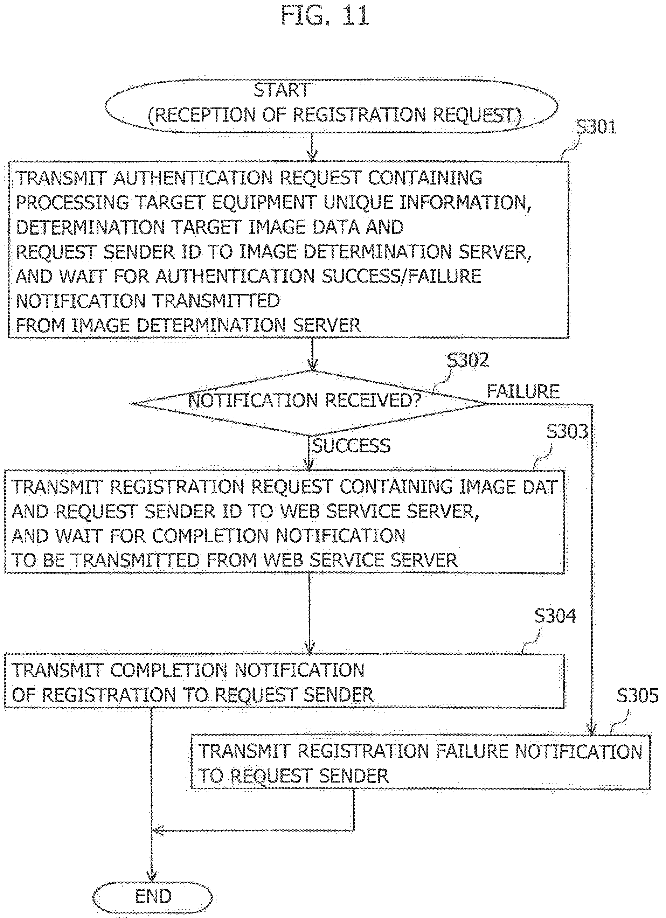

The request response unit 14 having received the registration request starts the registration request response process of, e.g., a procedure illustrated in FIG. 11.

Note that the request response unit 14 starts the registration request response process as far as being able to confirm that the received registration request is suitably formatted and that the request sender is the person who has already opened the individual introduction page. Whereas when the received registration request is unsuitably formatted and the request sender is the person who does not yet open the individual introduction page, the request response unit 14 sends, without starting the registration request response process, response-disabled notification back to the request sender (the user equipment 40 having transmitted the registration request).

As illustrated in FIG. 11, when in this registration request response process, the request response unit 14 at first transmits the authentication request containing the processing target equipment unique information, the determination target image data and the request sender ID to the image determination server 20 (step S301). Herein, the "processing target equipment unique information" connotes the equipment unique information contained in the received registration request. The "determination target image data" connotes the image data when the received registration request contains the image data, and connotes the image data related to the head frame, which is contained in the video data, when the received registration request contains the video data. The "request sender ID" connotes the user ID inputted when the request sender logs in. This request sender ID is specified by the session tracking parameter contained in the registration request.

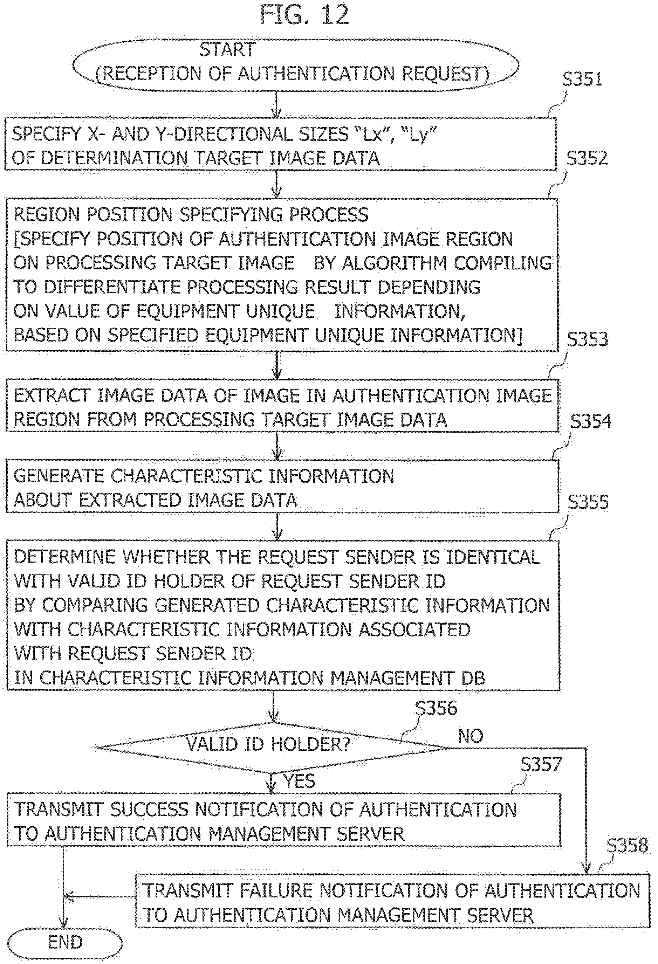

The image determination unit 23 (FIG. 2) receives the authentication request transmitted to the authentication management server 10. The image determination unit 23 having received the authentication request starts the authentication request response process of, e.g., a procedure illustrated in FIG. 12.

To be specific, the image determination unit 23 having received the authentication request, at first, specifies the X-directional size "Lx" and the Y-directional size "Ly" of the determination target image data (step S351). Herein, the "determination target image data" and the "processing target equipment unique information" connote the image data and the equipment unique information contained in the received authentication request, respectively.

In subsequent step S352, the characteristic information registration unit 22 specifies the region position specifying process having much the same contents of the process executed within the user equipment 40 by use of the processing target equipment unique information together with the specified X-directional size "Lx" and other equivalent data.

Thereafter, the characteristic information registration unit 22 extracts, from the processing target image data, the image data of the image in the authentication image region, of which the position is specified by the region position specifying process (step S353). Subsequently, the characteristic information registration unit 22 generates the characteristic information representing the characteristic of the extracted image data (which will hereinafter be termed authentication image region data) by the same algorithm as the characteristic information generation algorithm in step S254 (step S354).

The image determination unit 23 compares the generated characteristic information with the characteristic information associated with the request sender ID in the characteristic information management DB 21, and executes a process (step S355) of thus determining whether the request sender is a valid ID holder of the request sender ID. Herein, the "request sender ID" connotes the user ID contained in the received authentication request, and the "valid ID holder" of the request sender ID connotes the user to whom the request sender ID is actually allocated.

More concretely, in step S355, the image determination unit 23, at first, reads the characteristic information associated with the request sender ID (the user ID contained in the received authentication request) from the characteristic information management DB 21. Subsequently, the image determination unit 23 obtains a degree of dissimilarity indicating a degree of dissimilarity between the generated characteristic information and the readout characteristic information. Note that the degree of dissimilarity obtained by the image determination unit 23 is a numeric value that increases as a difference between these two sets of characteristic information enlarges.

The image determination unit 23 determines that the request sender is the valid ID holder of the request sender ID when the obtained degree of dissimilarity is equal to or smaller than a preset threshold value, and determines that the request sender is not the valid ID holder of the request sender ID whereas when not.

In short, the characteristic information about the same image data as the authentication image data in the authentication image storage unit 41 of each user equipment 40 is stored by being associated with the user ID of the user of each user equipment 40 in the characteristic information management DB 21. The authentication image data in the authentication image storage unit 41 of each user equipment 40 is embedded in such a location as to enable this authentication image data to be specified from the equipment unique information contained in an update request in the image data (or the video data) in the update request from a certain user equipment 40.

Therefore, supposing that the embedded authentication image data itself can be extracted from the image data in the update request, the process in step S355 can be modified to a process of determining whether the two sets of characteristic information are coincident with each other. However, as apparent from contents of an image/video registration request process (FIG. 10), the "determination target image data" in the authentication request response process is normally the "data obtained by extending the irreversibly compressed image data and again irreversibly compressing the authentication image data after replacing a part of extended image data with the authentication image data".

Accordingly, the image data with some pixel values being different from the original authentication image data is extracted as the authentication image region data from the determination target image data. Even when this sort of authentication image region data with the contents being slightly different from the original authentication image region data is extracted, the process in step S355 is therefore modified to the process of the procedure described above in order to enable the request sender to be determined as the valid ID holder of the request sender ID.

Note that various types of information can be used as the degree of dissimilarity when processing in step S355. For example, when the characteristic information is the luminance histogram data, a square value of a difference between pixel counts but with the same luminance (or the same luminance class), a total sum of absolute values and other equivalent values can be each used as the degree of dissimilarity. When the characteristic information is the color histogram data, a square value of a difference between pixel counts but with the same color (or the same color class), a total sum of absolute values and other equivalent values can be each used as the degree of dissimilarity.

The threshold value in the process of step S355 is information with a proper value that varies corresponding to values of "SX" and "SY", the characteristic information and a type of degree of dissimilarity (calculation algorithm). Hence, the threshold value may involve actually calculating the degrees of dissimilarities with respect to the several types of image data after determining the values of "SX" and "SY", the characteristic information and the types of degrees of dissimilarities, and adopting a value that is larger by several percent (%) than a maximum value of calculated results.

The image determination unit 23 having finished the process in step S355, when determining that the request sender is the valid ID holder of the request sender ID (step S356; YES), transmits authentication success notification to the authentication management server 10 (the request response unit 14) (step S357). Whereas when determining that the request sender is not the valid ID holder of the request sender ID (step S356; NO), the image determination unit 23 transmits authentication failure notification to the authentication management server 10 (the request response unit 14) (step S358). The image determination unit 23 having finished the process in step S357 or S358 terminates this authentication request response process.

As illustrated in FIG. 10, the request response unit 14 having transmitted the authentication request stands by till the authentication success notification or the authentication failure notification is transmitted from the image determination server 20 (the image determination unit 23). (step S301).

The request response unit 14, when receiving the authentication success notification (step S302; success), transmits the registration request containing the image/video data, the text information and the request sender ID each contained in the received registration request to the Web service server 30 (step S303).

The update processing unit 33 receives transmitted to the Web service server 30. The update processing unit 33 having received the registration request, as already explained, adds the image/video data and other equivalent data to the individual introduction page of the request sender, and thereafter transmits the completion notification to the authentication management server 10.

The request response unit 14 having transmitted the registration request to the Web service server 30 (the update processing unit 33) waits for this completion notification to be transmitted from the Web service server 30 (step S303). The request response unit 14, when the completion notification is transmitted, finishes this registration request response process (FIG. 11) after transmitting the completion notification to the registration request sender (step S304).

The request response unit 14, when receiving the authentication failure notification (step S302; failure), finishes this registration request response process after transmitting the completion notification to the registration request sender (step S305).

The request transmission unit 42 having transmitted the registration request to the authentication management server 10 (the request response unit 14) waits for receiving this completion notification (step S155 in FIG. 10). The request transmission unit 42, upon receiving the completion notification, terminates the process in step s155 and the image/video registration request process.

Described next are a procedure of transmitting a profile photo change request by the user equipment 40 (the request transmission unit 42) and a procedure of processing a request for registering the profile photo change request by the request response unit 14, the image determination unit 23 and the update processing unit 33.

As already explained, when the operator selects the "change of the profile photo" from on the operation selection screen displayed on the display, the request transmission unit 42 starts the profile photo change request process.

This profile photo change request process is a process of generating and transmitting the profile photo change request, and is basically the process of the same procedure as the image/video request process (FIG. 10). The following discussion will therefore describe contents of the profile photo change request process, while focusing on differences from the image/video registration request process by using FIG. 10.

The profile photo change request process is a process for changing the profile photo data used in the individual introduction page to another set of profile photo data (i.e., the image data). Hence, the profile photo change request process entails executing the same profile photo data acquiring process as the process executed in step S101 of FIG. 5 in place of the registration target data acquiring process of acquiring the image data or the video data from the user.

After the profile photo data acquiring process, the same processes as those executed in step S152 - S154 when the registration target data is the image data. A final step of the profile photo change request process involves executing a process of transmitting the profile photo change request containing the profile photo data with some portions being replaced by the authentication image data to the authentication management server 10, and waiting for the completion notification from the authentication management server 10.

The request response unit 14 receives the profile photo change request (which will hereinafter be also simply referred to as the change request) transmitted to the authentication management server 10. The request response unit 14 having received the change request starts the change request response process. Note that the request response unit 14 starts the change request response process as far as being able to confirm that the received change request is suitably formatted and that the request sender is the person who has already opened the individual introduction page.

The change request response process is basically the same as the registration request response process (FIG. 11) described above.

To be specific, the request response unit 14 having started the change request response process, to begin with, transmits the authentication request containing the processing target equipment unique information, the determination target image data and the request sender ID to the image determination server 20 (the image determination unit 23). Note that the determination target data in the registration request response process is the image data in the received registration request, or the image data related to the first frame (head frame), this image data being contained in the video data in the received registration request. It does not, however, happen that the change request contains the video data. Hence, the determination target image data in the change request response process connotes the image data (the profile photo data) contained in the received change request.

The image determination unit 23 having received the authentication request executes the authentication request response process described above (FIG. 12), thereby determining whether the request sender is the valid ID holder of the request sender ID. The image determination unit 23, when determining the request sender is the valid ID holder of the request sender ID, transmits the completion notification of the authentication to the authentication management server 10 (the request response unit 14). The image determination unit 23, when determining the request sender is not the valid ID holder of the request sender ID, transmits the failure notification of the authentication to the authentication management server 10 (the request response unit 14).

The request response unit 14 having transmitted the authentication request to the image determination server 20 (the image determination unit 23) waits for any one notification to be transmitted from the image determination server 20.

The request response unit 14, when receiving the success notification of the authentication, transmits the change request (the profile photo data change request) containing the image data, the text information the request sender ID each contained in the received registration request to the Web service server 30.

The update processing unit 33 receives the change request transmitted to the Web service server 30. The update processing unit 33 having received the change request, as already explained, transmits the completion notification to the authentication management server 10 after changing the profile photo data and other equivalent data of the individual introduction page of the request sender.

The request response unit 14 having transmitted the change request to the Web service server 30 (the update processing unit 33) waits for the completion notification to be transmitted from the Web service server 30. The request response unit 14, when the completion notification is transmitted, finishes the change request response process after transmitting the completion notification to the request sender.

The request response unit 14, when receiving the failure notification of the authentication, transmits the response-disabled notification to the request sender without transmitting the change request (the profile photo data change request) to the Web service server 30. Then, the request response unit 14 terminates the change request response process.

Although considered already obvious from the description made so far, comprehensive operations, related to the authentication image data, of the user equipment 40 and the information processing apparatus 1, are herein described.

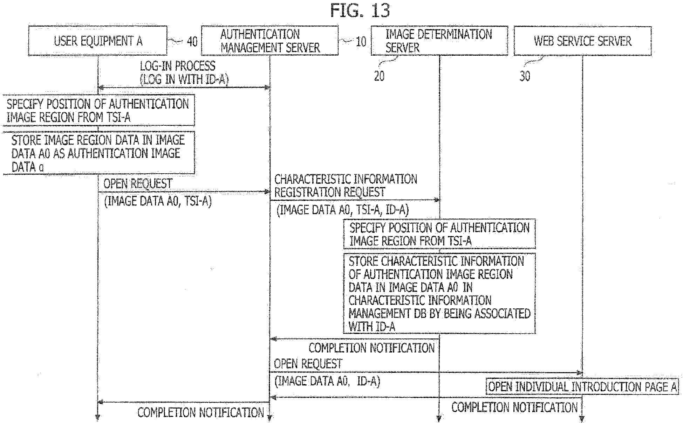

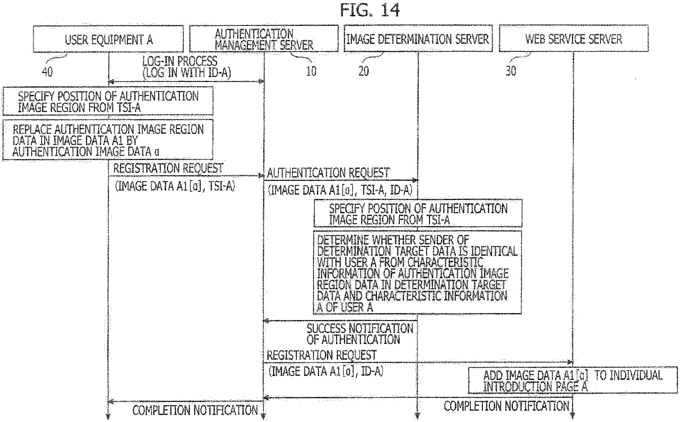

FIG. 13 depicts a sequence diagram of processes among a user equipment A, the authentication management server 10, the image determination server 20 and the Web service server 30 when a user A opens the individual introduction page. FIG. 14 depicts a sequence diagram of processes among the user equipment A, the authentication management server 10, the image determination server 20 and the Web service server 30 when the user A registers the image data in the individual introduction page. Note that the user equipment A is identical with the user equipment 40 of the user A in FIGS. 13, 14 and in the following discussion. The equipment unique information of the user equipment A is notated by "TSI-A", and the user ID of the user A is notated by "ID-A". The authentication image region data connotes, as already defined, the image data of the image in the authentication image region, of which the position is specified from the equipment unique information.

As illustrated in FIG. 13, when the user A opens the individual introduction page, to start with, a log-in process is carried out between the user A (the user equipment A) and the authentication management server 10. Executed thereafter in the user equipment A are a process (unillustrated) of prompting the user A to capture/designate the profile photo data (which will hereinafter be termed image data A0) and a process of specifying the position of the authentication image region from TSI-A. Then, after executing a process of storing the authentication image region data in the image data A0 as the authentication image data (which will hereinafter be referred to as authentication image data α) of the user A, the open request containing the image data A0, TSI-A and other equivalent data is transmitted to the authentication management server 10.

The authentication management server 10 (the authentication processing unit 12) having received the open request checks whether the open request is a suitably formatted request given from the user not yet opening the individual introduction page (unillustrated). The authentication management server 10, when being able to confirm that the received open request is the suitably formatted request, transmits the characteristic information registration request containing the image data A0 and TSI-A together with ID-A specified from the session tracking parameter to the image determination server 20.

Executed within the image determination server 20 having received the characteristic information registration request is a process of specifying the position of the authentication image region from the equipment unique information contained in the characteristic information registration request. Carried out thereafter is a process of storing the characteristic information of the authentication image region data of the image data A0 in the characteristic information management DB 21 by being associated with ID-A. Note that the equipment unique information contained in the characteristic information registration request when the user A opens the individual introduction page is TSI-A, and hence the authentication image region data in the image data A0 is the authentication image data α. It therefore follows that the characteristic information of the authentication image data α is stored in the characteristic information management DB 21 by being associated with ID-A.

Upon completing the process of storing the characteristic information of the authentication image data α in the characteristic information management DB 21, the completion notification is transmitted to the authentication management server 10.

The authentication management server 10 having received this completion notification transmits, to the Web service server 30, the open request containing the image data A0 and other equivalent data, and ID-A specified from the session tracking parameter, which are received as elements of the registration request. The Web service server 30 having received this open request opens an individual introduction page A of the user A, with the image data A0 being used as the profile photo data.

As depicted in FIG. 14, also when the user A registers the image data in the individual introduction page, at first the log-in process is performed. Executed thereafter within the user equipment A are a process (unillustrated) of prompting the user A to capture/designate image data A1 to be registered in the individual introduction page A, and a process of specifying the position of the authentication image region from TSI-A. A process of replacing the authentication image region data in the image data A1 by the authentication image data α, is thereafter executed. The registration request containing image data A1[α] defined as the image data A1 with some portions being replaced by the authentication image data α, TSI-A and other equivalent data, is transmitted to the authentication management server 10.

The authentication management server 10 having received the registration request checks whether the registration request is the suitably formatted request given from the user already having opened the individual introduction page. The authentication management server 10, when being able to confirm that the received registration request is the request satisfying the condition described above, transmits the authentication request containing the image data A1[α], TSI-A and ID-A specified from the session tracking parameter to the image determination server 20.

The position of the authentication image region is specified from TSI-A contained in the authentication request within the image determination server 20 having received the authentication request. It is determined whether the sender of the determination target data is the user A, the determination being made based on the characteristic information about the authentication image region data in the image data (which will hereinafter be termed determination target data) contained in the authentication request, and on the characteristic information of the user A. Note that the characteristic information of the user A connotes the characteristic information stored in the user management DB 11 by being associated with the user ID (ID-A in this case) contained in the authentication request.

The determination target data is the image data A1[α], in which case the authentication image region data in the determination target data is the authentication image data α (which is, however, slightly different from the original authentication image data α due to re-compression). Accordingly, the characteristic information obtained from the authentication image region data in the determination target data remains almost unchanged from the characteristic information of the user A.

Therefore, the sender of the determination target data is determined to be the user A, and the image determination server 30 transmits the success notification of the authentication to the authentication management server 10. The authentication management server 10 having received this success notification of the authentication transmits the registration request containing the image data A1[α] and other equivalent data, and ID-A, which are received as the elements of the registration request, to the Web service server 30. Then, it follows that the Web service server 30 having received this registration request registers (adds) the image data A1[α] and other equivalent data in the individual introduction page.

Also when the user equipment A transmits the profile photo change request and the registration request containing the video data, the image data with the authentication image region data being the authentication image data α is handed over to the image determination server 20. Accordingly, the image determination server 20 determines that the sender of each request is the user A. As a result, it follows that the contents of the individual introduction page are updated as desired by the user A.

Next, such a case is considered that a user B having unlawfully acquired the user ID and the password of the user A tries to alter or falsify the individual introduction page opened to the public by the information processing apparatus 1.

Considered at first is a case in which the user B logs in the information processing apparatus 1 by inputting the user ID and the password of the user A by using the user equipment 40 (which will hereinafter be termed a user equipment B) of the user B himself or herself, and tries to register image data B in the individual introduction page A. Incidentally, an assumption is that the equipment unique information of the user equipment B is notated by TSI-B, and authentication image data β is stored in the authentication image storage unit 41 of the user equipment B.

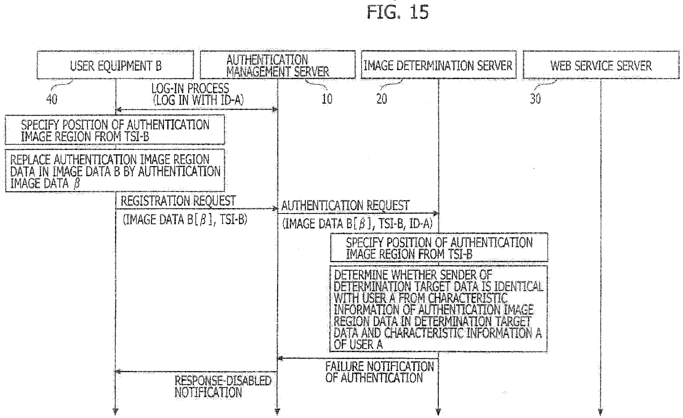

In this case, as illustrated in FIG. 15, the registration request to be transmitted to the authentication management server 10 from the user equipment B is to contain image data B1[β] obtained by replacing the authentication image region data in the image data B by the authentication image data β, and TSI-B. The authentication management server 10 transmits, to the image determination server 20, the authentication request containing the image data B1[β], TSI-B and ID-A because of the received registration request being the request given from the user logging in by use of ID-A.

The position of the authentication image region is specified from TSI-B contained in the authentication request within the image determination server 20 having received the authentication request. In order to determine whether the sender of the determination target data is the user A, the characteristic information of the authentication image region data in the determination target data is compared with the characteristic information (i.e., the characteristic information of the authentication image data α) associated with ID-A in the characteristic information management DB 21. In this instance, the authentication image region data in the determination target data is the authentication image data β, and hence normally the characteristic information of the authentication image region data is completely different from the characteristic information A of the authentication image data α. The sender of the determination target data is therefore determined not to be the user A, and the failure notification of the authentication is transmitted to the authentication management server 10.

When receiving the failure notification of the authentication, the authentication management server 10 transmits the response-disabled notification to the user equipment B without transmitting the registration request to the Web service server 30. In other words, this leads to the completion of the processes by the information processing apparatus 1 with respect to the change request without registering the image data B in the individual introduction page A.

Also when the user B tries to change the profile photo data of the individual introduction page A by using the user equipment B, because of the authentication image data being largely different, the sender of the profile photo request is similarly determined not to be the user A. It therefore follows that the profile photo on the individual introduction page remains unchanged.

Thus, the information processing apparatus 1 according to the first embodiment is configured to inhibit the individual introduction page from being unlawfully altered or falsified by using the image data registration program 45.

It is also considered that the user B tries to alter or falsify the individual introduction page A by using a self-written and compiled program. In this case, the user B might be able to generate a program enabling the transmission of the suitably formatted registration/change request (in other words, a request that triggers a start of the registration request response process or the change request response process). However, the information processing apparatus 1 neither adds the image data to the individual introduction page A nor changes the profile photo data of the individual introduction page A unless the authentication image region data in the image data contained in the registration/change request is substantially the same as the authentication image data α. Then, the authentication image data α is the image data of the image in a small region (see the authentication image region 110 in FIG. 7), and hence the user B does not notice in most cases that the image data contained in the registration/change request needs processing.

The information processing apparatus 1 is therefore configured to make it difficult to unlawfully alter or falsify the individual introduction page by the self-written and compiled program.

Besides, the operation to be invariably conducted by the user when registering the image/video data in the individual introduction page, is the same as the operation that is generally conducted when registering the image/video data in the Web page. Accordingly, the information processing apparatus 1 can be said to be an apparatus enabling the confirmation that the requester making the request for the process with respect to the image/video data via the network is identified without increasing a load on the user.

### <<Second Embodiment>>

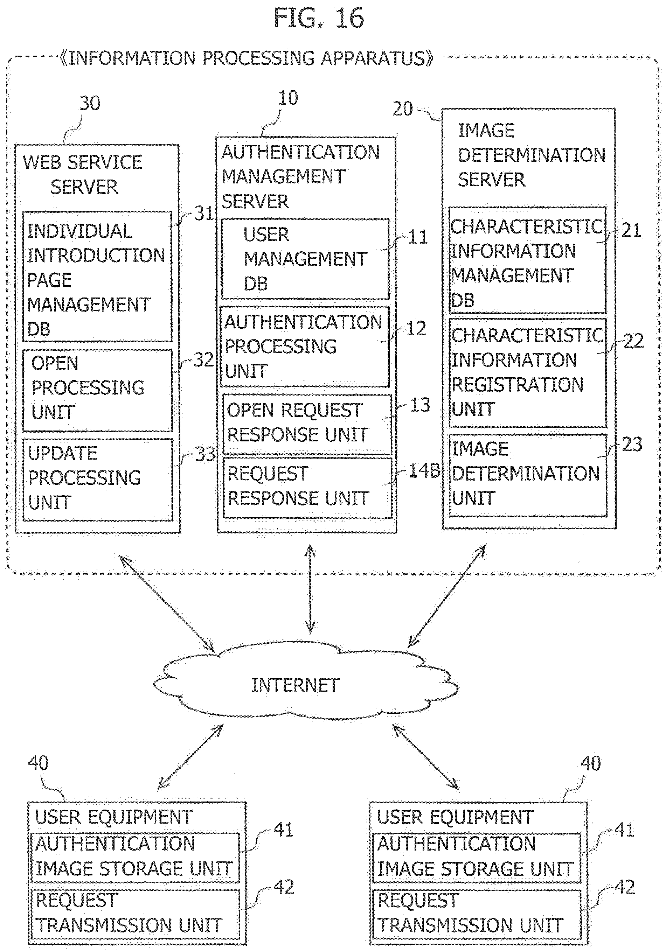

FIG. 16 illustrates an example of a functional block configuration of an information processing apparatus 2 according to a second embodiment together with an example of a functional block configuration of the user equipment 40.

As apparent from a comparison between FIG. 16 and FIG. 4, the information processing apparatus 2 according to the second embodiment is an apparatus configured to change the request response unit 14 in the authentication management server 10 of the information processing apparatus 1 according to the first embodiment to a request response unit 14B. To be specific, the information processing apparatus 2 is an apparatus configured to install a program, different in terms of its contents from the authentication management server program in the authentication management server 10 of the information processing apparatus 1, into a computer used as the authentication management server 10.

The user equipment 40 used for making use of the information processing apparatus 2 according to the second embodiment is also the same device as the user equipment 40 according to the first embodiment. Therefore, the following discussion will describe functions of the information processing apparatus 2 according to the second embodiment, while focusing on a function of the request response unit 14B.

The request response unit 14B is a modified (improved) unit of the request response unit 14 to execute a registration request response process and a change request response process, which have different contents from those described above.

The registration request response process executed by the request response unit 14B is a process of a procedure depicted in FIG. 14. Specifically, in step S401, the request response unit 14B having started the registration request response process executes the same process as the process in step S301 (FIG. 11). The request response unit 14B, when the failure notification of the authentication is transmitted from the image determination server 20 (step S402; NO), similarly to the request response unit 14, finishes the registration request response process after transmitting the failure notification of the authentication to the request sender (step S406).

Whereas when receiving the success notification of the authentication (step S402; success), in step S403, the request response unit 14B deems that the authentication image region of the registration target data is a region with the image data being defective, and executes an authentication image region restoration process for restoring the region. Note that the registration target data connotes the image data or the video data, which is being received as the element of the received registration request. When processing in step S403, the request response unit 14B specifies the position of the authentication image region by executing the region position specifying process having the same contents as those of the process executed by the image determination unit 23 and the request transmission unit 42.

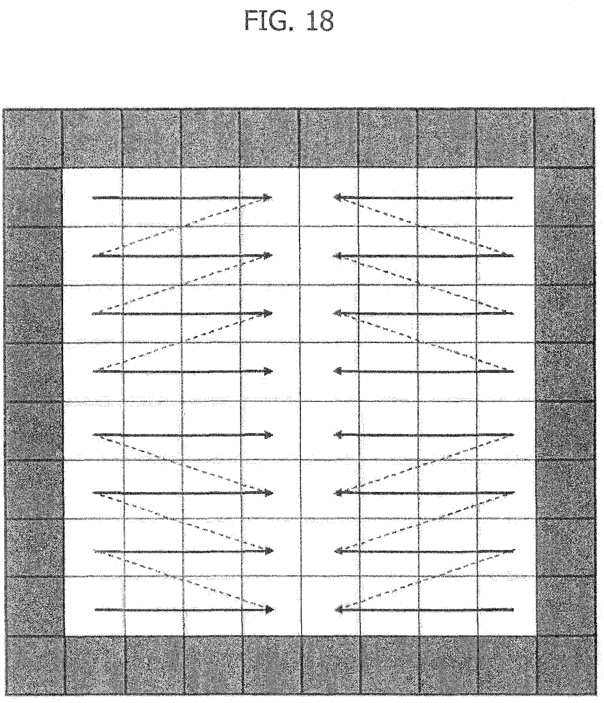

A restoration algorithm for the authentication image region restoration process in step S403 may be a high grade algorithm (instanced by an image restoration algorithm by sequential synthesization of textures, and other equivalent algorithms) capable of preferably correcting a large defective region. However, the authentication image region is a small-sized region, and hence, the authentication image region can be restored inconspicuously about a difference from other regions even by using a simple restoration algorithm. It is therefore preferable to use the restoration algorithm as schematically illustrated in, e.g., FIG. 18 for restraining the load on the authentication management server 10.

To be specific, it is preferable to use the restoration algorithm of:
segmenting the authentication image region (the region organized by (8 x 8) pixels but not marked with hatching in FIG. 18) into four regions, i.e., a left upper region, a right upper region, a left lower region and a right lower region;
setting colors of the pixels of the left upper region such that the color of each pixel takes an average value of a value of the pixel color existing upper by one stage and a value of the pixel color existing more leftward by one stage in the sequence indicated by arrows;
setting colors of the pixels of the right upper region such that the color of each pixel takes an average value of a value of the pixel color existing upper by one stage and a value of the pixel color existing more rightward by one stage in the sequence indicated by arrows;
setting colors of the pixels of the left lower region such that the color of each pixel takes an average value of a value of the pixel color existing lower by one stage and a value of the pixel color existing more leftward by one stage in the sequence indicated by arrows; and
setting colors of the pixels of the right upper region such that the color of each pixel takes an average value of a value of the pixel color existing lower by one stage and a value of the pixel color existing more rightward by one stage in the sequence indicated by arrows.

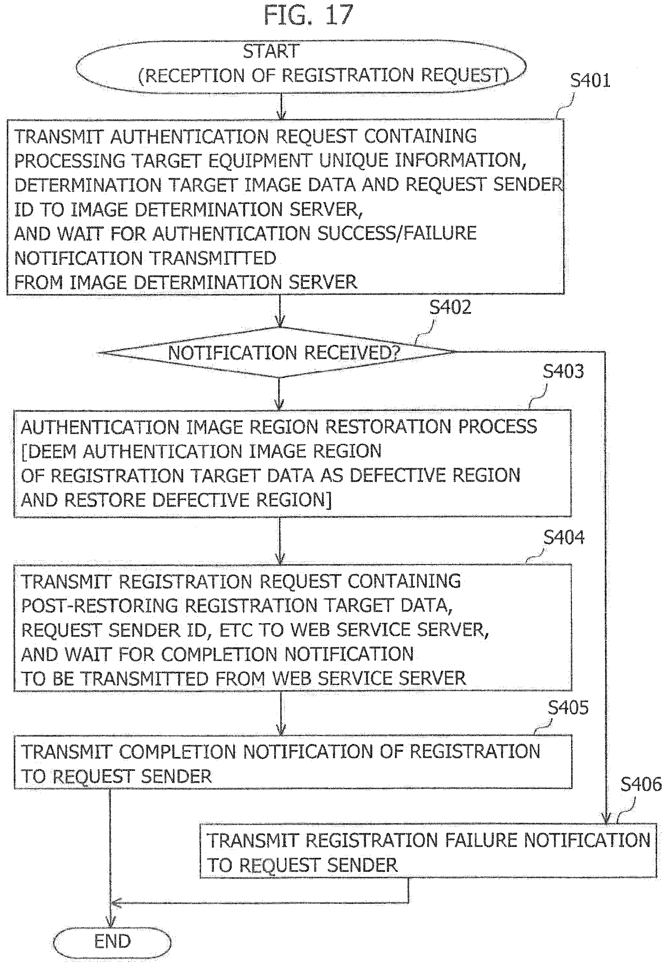

The request response unit 14B having finished the process in step S403 (FIG. 17) transmits the registration request containing the registration target data with the authentication image region being restored to the Web service server 30 (step S404). More concretely, the request response unit 14B transmits, to the Web service server 30, the registration request containing the registration target data with the authentication image region being restored, the text information contained in the received registration request, and the request sender ID specified by the session tracking parameter.

The request response unit 14B, similarly to the request response unit 14, waits for the completion notification to be transmitted from the Web service server 30 (step S404), and, upon the completion notification being transmitted, transmits the completion notification to the request sender (step S405), and thereafter finishes this registration request response process (FIG. 17).

The change request response process executed by the request response unit 14B is basically the same as this registration request response process.

To be specific, the request response unit 14B having started the change request response process, at first, transmits the authentication request containing the processing target equipment unique information, the determination target image data (the profile photo data contained in the change request) and the request sender ID to the image determination server 20 (the image determination unit 23). Thereafter, the request response unit 14 waits for any of the failure notification of the authentication and the failure notification of the authentication to be transmitted from the image determination server 20.

The request response unit 14B restores the authentication image region for the profile photo data received as the element of the change request when receiving the success notification of the authentication. Then, the request response unit 14B transmits the change request (the profile photo data change request) containing the profile photo data with the authentication image region being restored, the text information and the request sender ID to the Web service server 30.

The update processing unit 33 receives the change request transmitted to the Web service server 30. The update processing unit 33 having received the change request transmits the completion notification to the authentication management server 10 after changing the profile photo data of the individual introduction page of the request sender.

The request response unit 14B having transmitted the change request to the Web service server 30 (the update processing unit 33) waits for the completion notification to be transmitted from the Web service server 30. Then, the request response unit 14B, when the completion notification is transmitted, finishes the change request response process after transmitting the completion notification to the request sender.

The request response unit 14B, when receiving the failure notification of the authentication, transmits the response-disabled notification to the request sender without transmitting the change request to the Web service server 30. Then, the request response unit 14B terminates the change request response process.

In short, similarly to the information processing apparatus 1 according to the first embodiment, the information processing apparatus 2 according to the second embodiment does not accept the registration/change request unless the authentication image region data in the image/video data contained in the registration/change request is substantially identical with the authentication image data of the request sender. Accordingly, the generation of the registration/change request acceptable to the information processing apparatus 2 entails making recognizable at least the equipment unique information and the authentication image (the authentication image data). However, as obvious from the function of the request response unit 14B described above, the information processing apparatus 2 is configured to post "the image/video obtained by replacing the embedded authentication image by another image" on the individual introduction page of each individual user. In other words, the information processing apparatus 2 is configured to make it difficult to specify the authentication image from each posted image/video on the individual introduction page opened to the public. Hence, the information processing apparatus 2 according to the second embodiment can be said to be the apparatus making it more difficult to alter or falsify the page than by the information processing apparatus 2 according to the first embodiment, which is to post the image/video partially containing the authentication image.

### «Third Embodiment»

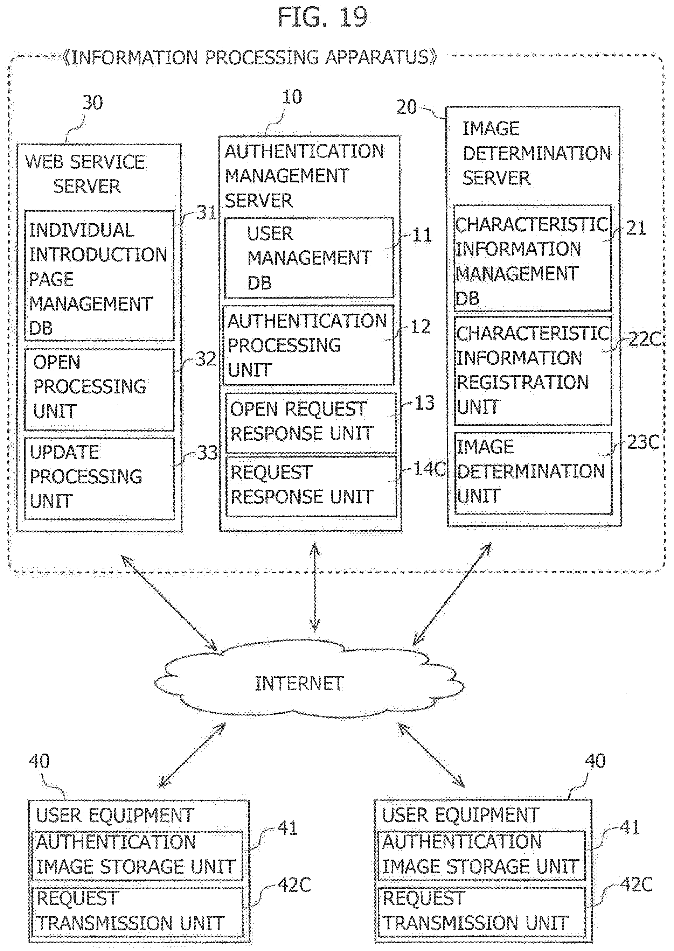

FIG. 19 illustrates an example of a functional block configuration of an information processing apparatus 3 according to a third embodiment together with an example of a functional block configuration of the user equipment 40.

The information processing apparatus 3 according to the third embodiment is an apparatus configured to modify (improve) the information processing apparatus 2 according to the second embodiment and, similarly to the information processing apparatus 2 (and the information processing apparatus 1), includes the authentication management server 10, the image determination server 20 and the Web service server 30 each connected to the Internet.

The Web service server 30 of the information processing apparatus 3 is the same as the Web service server 30 of the information processing apparatus 2 (and the information processing apparatus 1). The authentication management server 10 of the information processing apparatus 3 is a server configured to replace the open request response unit 13, the request response unit 14B in the authentication management server 10 of the information processing apparatus 2 by an open request response unit 13C and a request response unit 14C. The image determination server 20 of the information processing apparatus 3 is a server configured to replace the characteristic information registration unit 22 and the image determination unit 23 of the information processing apparatus 2 by a characteristic information registration unit 22C and an image determination unit 23C.

In other words, the authentication management server 10 is a computer installed with an authentication management server program having different contents from those of the authentication management server program in the authentication management server 10 of the information processing apparatus 2. The image determination server 20 is also a computer installed with an image determination server program having different contents from those of the image determination server program 25 in the image determination server 20 of the information processing apparatus 2 (and the information processing apparatus 1).

The user equipment 40 used for transmitting the open request and other equivalent requests to the information processing apparatus 3 is a terminal device configured to replace the request transmission unit 42 of the user equipment 40 used for transmitting the open request and other equivalent requests to the information processing apparatus 2 (and the information processing apparatus 1) by a request transmission unit 42C. In other words, the user equipment 40 is the terminal device installed with an image data registration program having different contents from those of the image data registration program 45.

The following discussion will describe functions of the open request response unit 13C, the request response unit 14C, the characteristic information registration unit 22C, the image determination unit 23C and the request transmission unit 42C, while focusing on differences from the open request response unit 13, the request response unit 14B, the characteristic information registration unit 22, the image determination unit 23 and the request transmission unit 42.

The discussion will starts with the function of the request transmission unit 42C. The request transmission unit 42C is a unit to execute the individual introduction page open request process, the image/video registration request process and the profile photo change request process, which basically have the same contents as those executed by the request transmission unit 42. However, each process executed by the request transmission unit 42C is a process of specifying the position of the authentication image region from generated random numbers, and containing the generated random numbers in the request to be transmitted.

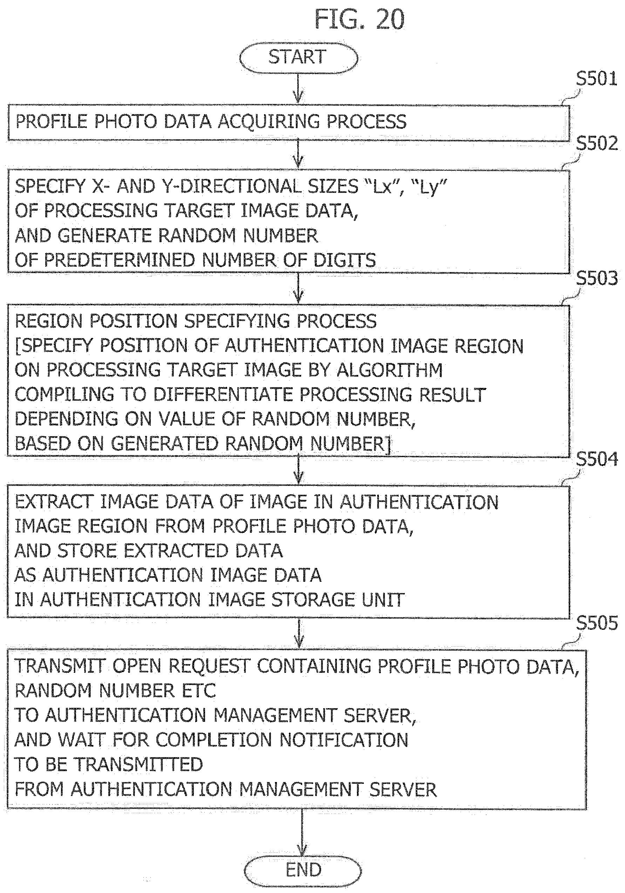

Concretely, the individual introduction page open process executed by the request transmission unit 42C is a process of a procedure illustrated in FIG. 20.

To be specific, the request transmission unit 42C having started the individual introduction page open request process carries out, at first, the same profile photo data acquiring process (step S501) as the process executed in step S101 (FIG. 5).

The request transmission unit 42C having finished the profile photo data acquiring process specifies the X-directional size "Lx" and the Y-directional size "Ly" of the profile photo data (the processing target image data in FIG. 20) captured/selected by the operator (step S102). In step S102, the request transmission unit 42C executes also a process of generating the random number of a predetermined number of digits.

Thereafter, the request transmission unit 42C executes, based on the generated random number, the region position specifying process for specifying a position of the authentication image region on the profile photo (the processing target image in FIG. 20) by an algorithm compiled to differentiate a processing result depending on a value of the random number (step S503).

This region position specifying process involves executing a process of replacing, e.g., the serial number information in the region position specifying process described above by "the generated random number".

To be specific, the request transmission unit 42C executes a process of calculating a remainder by dividing a first half of the generated random number by "Lx-Sx+1" as an X-coordinate value "x0" of an origin of the authentication image region, and calculating a remainder by dividing a second half of the generated random number by "Rh-Sy+1" as a Y-coordinate value "y0" of the origin of the authentication image region.

The request transmission unit 42C having finished the region position specifying process extracts the image data of the image in the authentication image region, of which the position is specified by the region position specifying process, from the profile photo data captured/selected by the operator (step S504). Then, the request transmission unit 42C finishes the process in step S504 after storing the extracted image data as the authentication image data in the authentication image storage unit 41.

The request transmission unit 42C having finished the process in step S504 transmits, to the authentication management server 10, the open request containing the profile photo data captured/selected by the operator, the text information inputted by the operator, and the random number used for specifying the authentication image region (step S505). Then, the request transmission unit 42C waits for the completion notification to be transmitted form the authentication management server 10 (step S505) and, upon receiving the completion notification, finishes the process in step S505 and this individual introduction page open request process (the process in FIG. 20).

Each of the image/video registration request process and the profile photo change request process executed by the request transmission unit 42C is likewise the process of specifying the position of the authentication image region from the generated random number, and containing the generated random number in the request to be transmitted.

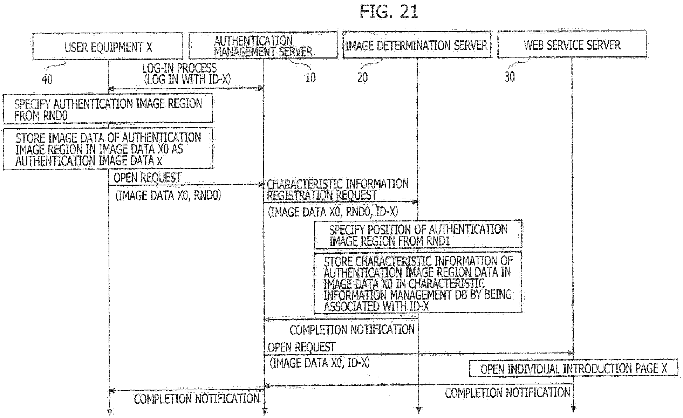

Next, functions of the open request response unit 13C and the characteristic information registration unit 22C will be described. FIG. 21 illustrates a sequence diagram of processes among a user equipment X, the authentication management server 10, the image determination server 20 and the Web service server 30 when a user X opens the individual introduction page. Note that the user equipment X indicates the user equipment 40 of the user X (an arbitrary user), and "ID-X" represents a user ID of the user X in FIG. 21 and in the following discussion.

The authentication management server 10 (the open request response unit 13C) having received the open request executes an open request response process having basically the same contents as those of the open request response process (FIG. 8) described above. As schematically illustrated in FIG. 21, however, in the open request response process performed by the open request response unit 13C, a random number RND0 transmitted from the user equipment 40 (the user equipment X) is contained in the characteristic information registration request and the open request to be transmitted.

The image determination server 20 (the characteristic information registration unit 22C) having received the characteristic information registration request executes the characteristic information registration request having substantially the same contents as those of the characteristic information registration request response process (FIG. 9) described above except a point of a difference of a method of specifying the position of the authentication image region. Specifically, the characteristic information registration unit 22C carries out the characteristic information registration request response process that is different from the characteristic information registration request response process described above in terms of only a point of executing the same region position specifying process as the process performed by the request transmission unit 42C in a step corresponding to step S252.

The open request response unit 13C having received the completion notification from the image determination server 20 (the characteristic information registration unit 22C) carries out the same process as the process executed by the open request response unit 13 in each of the information processing apparatuses 1, 2.

To be specific, the open request response unit 13C having received the completion notification transmits the open request containing the processing target image data, the processing target text information and the open requester ID to the Web service server 30 (the open processing unit 32). The open request response unit 13C waits for the completion notification to be transmitted from the Web service server 30 and, when the completion notification is transmitted, adds information purporting the completion of opening the individual introduction page for the open requester to the user management DB 11. Then, the open request response unit 13C finishes the open request response process after transmitting the completion notification to the request sender.

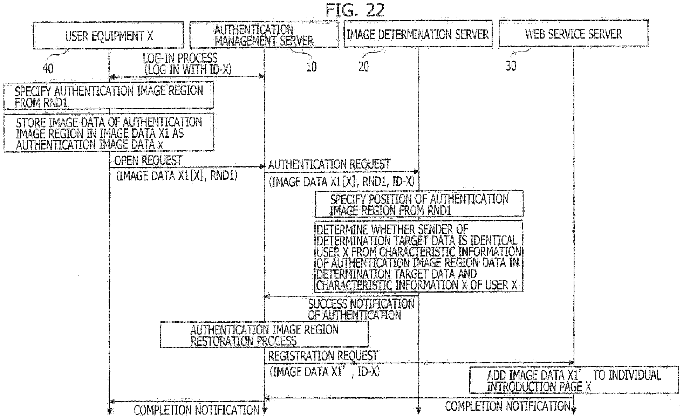

Next, functions of the request response unit 14C and the image determination unit 23C will be described. FIG. 22 illustrates a sequence diagram of processes among the user equipment X, the authentication management server 10, the image determination server 20 and the Web service server 30 when the user X registers the image data in the individual introduction page.

The authentication management server 10 (the request response unit 14C) having received the registration request performs the registration request response process having basically the same contents as those of the registration request response process (FIG. 17) carried out by the request response unit 14B in the information processing apparatus 2. As schematically illustrated in FIG. 22, however, in the open request response process executed by the open request response unit 13C, the authentication request to be transmitted contains not the equipment unique information but a random number RND1 transmitted from the user equipment 40 (the user equipment X).

The image determination server 20 (the image determination unit 23C) having received the authentication request performs the authentication request response process having substantially the same contents as those of the authentication request response process (FIG. 12) described above except the point of the method of specifying the position of the authentication image region. In other words, the image determination unit 23C executes the authentication request response process that is different from the authentication request response process described above in terms of only a point of performing the same region position specifying process as the process carried out by the request transmission unit 42C in a step corresponding to step S352.

The request response unit 14C having received the completion notification from the image determination server 20 (the image determination unit 23C) executes the same process as the request response unit 14B in the information processing apparatus 2 executes.

Specifically, the request response unit 14C having received the completion notification, at first, restores the authentication image region for the registration target data. Then, the request response unit 14C transmits the registration request containing the post-restoring registration target data, the processing target text information and the request sender ID to the Web service server 30 (the update processing unit 33). The request response unit 14C waits for the completion notification to be transmitted from the Web service server 30 and, when the completion notification is transmitted, terminates the registration request response process after transmitting the completion notification to the request sender.

As apparent from the description made so far, the information processing apparatus 3 has a function of opening to the public the individual introduction page on which to post "the image/video obtained by replacing the embedded authentication image by another image" and on which to differentiate a position of embedding the authentication image on a per image/video basis. Similarly to the information processing apparatuses 1, 2, the information processing apparatus 3 does not accept the registration/change request unless the authentication image region data in the image/video data contained in the registration/change request is substantially identical with the authentication image data registered when the request sender opens the individual introduction page. Therefore, although the generation of the registration/change request accepted by the information processing apparatus 3 entails making recognizable at least the equipment unique information and the authentication image, the authentication image is not specified from the individual introduction page that is opened to the public by the information processing apparatus 3. The information processing apparatus 3 according to the third embodiment can be therefore said to be the apparatus making it particularly difficult to unlawfully alter or falsify the page.

### <<Modified Mode>>

The information processing apparatuses 1 - 3 according to the first through third embodiments described above can be modified in a variety of forms. For example, supposing that the equipment unique information is stored in the information processing apparatus by being associated with the user ID, the equipment unique information can be specified from the user ID even when the equipment unique information is not contained in the registration request/change request. Accordingly, each of the information processing apparatuses 1, 2 can be modified into an apparatus configured to store the equipment unique information and the characteristic information in the characteristic information management DB 21 by being associated with the user ID and to receive the registration request/change request not containing the equipment unique information. Note that the information processing apparatuses 1, 2 are thus modified, in which case the equipment unique information flows restrictedly only once on the network. Accordingly, the equipment unique information to be transmitted to the information processing apparatus from the user equipment 40 can be prevented from being actually eavesdropped.

The restoration function of the authentication image region can be also removed from the information processing apparatus 3. Further, the information processing apparatus 3 can also modified into an apparatus configured to select the authentication image region from within the entire region of the profile photo data. Likewise, the information processing apparatus 3 can be also modified into an apparatus configured to select the authentication image region from within the entire region of the image of a first frame of each file of image or video. It is, however, a better option that the original image remains unchanged in the central region. For this reason, it is preferable that the authentication image region is positioned in the vicinity of an edge of the image.

Each of the information processing apparatuses 1 through 3 can be also modified into an apparatus configured to store the authentication image region data itself in the profile photo data as the characteristic information. Note that each of the information processing apparatuses 1 through 3 is modified into such a type of apparatus, in which case it follows that the request sender is authenticated normally by making a direct comparison between two sets of image data. A reason why so is that it is better to save the characteristic information of the authentication image region data in the profile photo data when generating and comparing two sets of image data with each other because of being able to restrain the same characteristic information from being generated a multiple number of times. In the case of making the modification described above, however, the two sets of image data can be also compared with each other after generating the characteristic information of the two sets of image data.

Each of the information processing apparatuses 1, 2 can be also modified into an apparatus configured to specify the position of the authentication image region based on a designated value when each individual user opens the individual introduction page. Incidentally, in this case, it follows that the user equipment 40 is modified into a terminal device configured to specify the position of the authentication image region based on the designated value when the user opens the individual introduction page.

Each of the information processing apparatuses 1 through 3 is the apparatus configured to provide the Web service enabling the user to easily open the individual introduction page, and can be also modified into an apparatus configured to save the image/video data in the storage from each user.

Each of the information processing apparatuses 1 through 3 can be also modified into an apparatus configured to eliminate the necessity for installing the special program (the image data registration program 45 described above) into the user equipment 40. To be specific, each of the information processing apparatuses 1 through 3 can be also modified into an apparatus configured to provide an applet and other equivalent applications for causing each user equipment 40 to execute the individual introduction page request process. Note that in this case each user is normally sets a policy file for permitting an operation of a local file based on each applet within the user equipment 40.

Each of the information processing apparatuses 1 through 3 can be also modified into an apparatus (configured to include two servers) configured so that the authentication management server 10 has the function as the image determination server 20, and an apparatus configured so that the Web service server 30 has the functions as the authentication management server 10 and the image determination server 20. Further, each of the information processing apparatuses 1 through 3 can be also modified into an apparatus configured so that the Web service server 30 receives a variety of requests, and requests the authentication management server 10 and the image determination server 20 to make the log-in authentication and the authentication based on the authentication image. Each of the information processing apparatuses 1 through 3 can be also modified into an apparatus used by being connected to not the Internet but another type of network.

### [Description of the Reference Numerals and Symbols]

- 1,2,3: information processing apparatus
- 10: authentication management server
- 11: user management DB
- 12: authentication processing unit
- 13, 3C: open request response unit
- 14, 14B, 14C: request response unit
- 15: authentication management server program
- 20: image determination server
- 21: characteristic information management DB
- 22, 22C: characteristic information registration unit
- 23, 23C: image determination unit
- 25: image determination server program
- 30: Web service server
- 31: individual introduction page management DB
- 32: open processing unit
- 33: update processing unit
- 35: Web service server program
- 40: user equipment
- 41: authentication image storage unit
- 42, 42: Crequest transmission unit
- 45: image data registration program

## Claims

1. An information processing apparatus comprising:
an information storage unit configured to store characteristic information representing a characteristic of authentication image data by being associated with user identifying information; and
a control unit,
the control unit executing:
a process of acquiring image data, user identifying information and position indicating information indicating a position of authentication image data embedded in the image data from a requester making a request for a process with respect to the image data via a network;
a process of extracting image data in position indicated by the acquired position indicating information from the acquired image data, and determining whether the requester is identical with a self user identified by the acquired user identifying information by comparing characteristic information representing characteristic of the extracted image data with characteristic information stored in the information storage unit by being associated with the acquired user identifying information; and
a process of executing the process requested by the requester with respect to the acquired image data when the requester is determined to be the self user identified by the acquired user identifying information.

2. The information processing apparatus according to claim 1, wherein the control unit executes, when the requester is determined to be the self user identified by the acquired user identifying information, an image restoration process of treating a region embedded with the authentication image data as a defective region with non-existence of effective pixel data with respect to the acquired image data, and executing the process with respect to the image data after the image restoration process.

3. The information processing apparatus according to claim 1 or 2, wherein the characteristic information representing the characteristic of the image data is color histogram data of the image data.

4. The information processing apparatus according to any one of claims 1 through 3, wherein the position indicating information is information unique to a terminal device used for the requester to transfer and receive the information to and from the information processing apparatus.

5. The information processing apparatus according to any one of claims 1 through 4, wherein the control unit specifies the position of the image data to be extracted by performing a remainder arithmetic operation about the acquired position indicating information.

6. The information processing apparatus according to claim 4, wherein the terminal device is a mobile phone or a satellite phone, and
the position indicating information is International Mobile Equipment Identity (IMEI) allocated to the terminal device.

7. The information processing apparatus according to claim 4, wherein the position indicating information is a Media Access Control (MAC) address of the terminal device.

8. The information processing apparatus according to any one of claims 1 through 7, wherein the process is a process of adding the image data to a Web page for the requester.

9. A terminal device comprising:
a retaining unit configured to retain authentication image data representing an authentication image; and
a transmission processing unit configured to have a first function of generating second image data by replacing a part of image data to be processed by an information processing apparatus by the authentication image data retained in the retaining unit, and transmitting the generated second image data to the information processing apparatus, and a second function of transmitting information indicating a position of the part, replaced by the authentication image data, of the second image data to the information processing apparatus.

10. The terminal device according to claim 9, further comprising a digital camera to generate the image data to be processed by the information processing apparatus.

11. The terminal device according to claim 10, wherein the authentication image data retained in the retaining unit is a part of image data generated by the digital camera.

12. An information processing method by which a computer executes:
a process of acquiring image data, user identifying information and position indicating information indicating a position of authentication image data embedded in the image data from a requester making a request for a process with respect to the image data via a network;
a process of extracting image data in position indicated by the acquired position indicating information from the acquired image data, and determining whether the requester is identical with a self user identified by the acquired user identifying information by comparing characteristic information representing characteristic of the extracted image data with characteristic information stored in the information storage unit by being associated with the acquired user identifying information; and
a process of executing the process requested by the requester with respect to the acquired image data when the requester is determined to be the self user identified by the acquired user identifying information.

13. An information processing program to make a computer execute:
a process of acquiring image data, user identifying information and position indicating information indicating a position of authentication image data embedded in the image data from a requester making a request for a process with respect to the image data via a network;
a process of extracting image data in position indicated by the acquired position indicating information from the acquired image data, and determining whether the requester is identical with a self user identified by the acquired user identifying information by comparing characteristic information representing characteristic of the extracted image data with characteristic information stored in the information storage unit by being associated with the acquired user identifying information; and
a process of executing the process requested by the requester with respect to the acquired image data when the requester is determined to be the self user identified by the acquired user identifying information.
